(19) **Europäisches Patentamt / European Patent Office / Office européen des brevets**

(11) **EP 3 996 866 B1**

(12) **EUROPEAN PATENT SPECIFICATION**

(45) Date of publication and mention of the grant of the patent:
**21.05.2025 Bulletin 2025/21**

(21) Application number: **20737063.6**

(22) Date of filing: **06.07.2020**

(51) International Patent Classification (IPC):
**B23K 26/03** (2006.01)

(52) Cooperative Patent Classification (CPC):
**B23K 26/03**

(86) International application number:
**PCT/IB2020/056336**

(87) International publication number:
**WO 2021/005489 (14.01.2021 Gazette 2021/02)**

(54) **APPARATUS AND PROCESS FOR THE SURFACE PROCESSING OF CYLINDRICAL BODIES, IN PARTICULAR LAMINATION CYLINDERS**

VORRICHTUNG UND VERFAHREN FÜR DIE OBERFLÄCHENVERARBEITUNG VON ZYLINDRISCHEN KÖRPERN, INSBESONDERE WALZENZYLINDER

DISPOSITIF ET PROCÉDÉ DE TRAITEMENT DE SURFACE DE CORPS CYLINDRIQUES, EN PARTICULIER DE CYLINDRES DE LAMINAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.07.2019 IT 201900011283**

(43) Date of publication of application:
**18.05.2022 Bulletin 2022/20**

(73) Proprietor: **Tenova S.p.A.**
**20149 Milano (IT)**

(72) Inventors:
• **BOSELLI, Giovanni**
**20149 Milano (IT)**
• **GABOARDI, Paolo**
**20149 Milano (IT)**
• **GARIANO, Andrea**
**20149 Milano (IT)**
• **PERASSOLO, Massimo**
**20149 Milano (IT)**
• **TREVISAN, Claudio**
**20149 Milano (IT)**

(74) Representative: **PGA S.p.A.**
**Via Mascheroni, 31**
**20145 Milano (IT)**

(56) References cited:
**EP-A2- 2 583 827     US-A1- 2011 024 400**

## Description

Field of the invention

The invention relates to an apparatus and a process for processing the lateral surface, i.e. the shell of cylindrical bodies, in particular by means of laser texturing. In detail, the invention has preferred application for the laser texturing of rolling cylinders and calenders.

Prior art

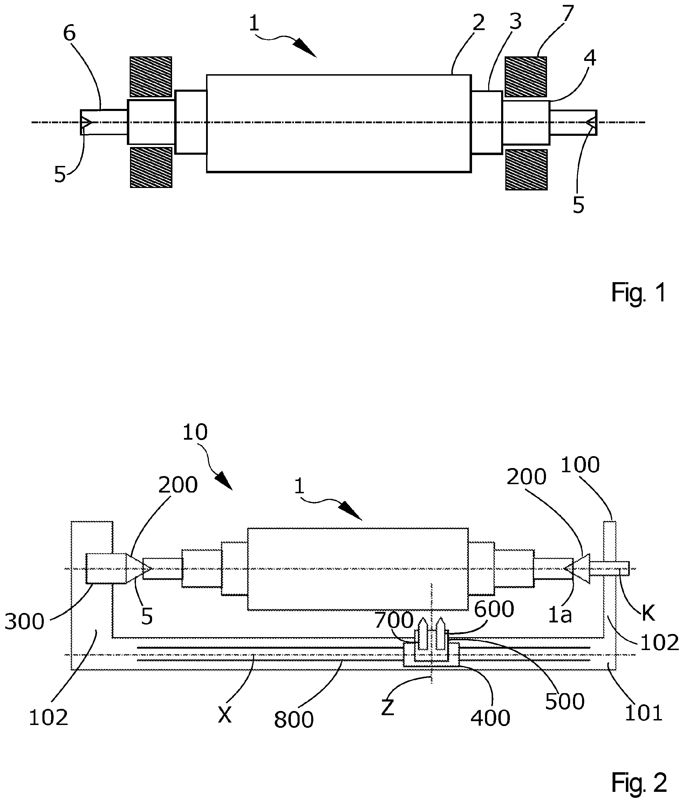

As is known in surface processing, e.g. in the processes of texturing the lateral surface or the shell of rolling cylinders and/or calenders, the cylinder being processed is first ground and then processed by means of incision which acts on the surface of the cylinder, generating the required characteristics of surface roughness. Different methods are available for making such incision processing; in this context, the technology will be considered which provides for the user of lasers. For various reasons, which are beyond the scope of the present document, the supports used for supporting the cylinder in the grinding steps can be separate from those used during the steps of surface processing by laser: this factor already introduces a potential risk of eccentricity between the rotation axis of the cylinder during the laser processing and the shell/lateral surface of the cylinder itself. For example, with reference to figure 1, it should be noted that in step of grinding the cylinder 1, it is typically supported at the necks 4 or at the shoulders 3 by using suitable means 7, while during the step of laser processing the cylinder is often supported between the centers 5 (fig. 1), i.e. between the conical slots made on the two head surfaces of the ends 6 of the cylinder. Even if the engagement of the cylinder between the conical slots 5 allows attaining high rotation speeds of the cylinder without damaging the support surfaces (necks and shoulders) of the cylinder itself and without requiring lubrication which can dirty the cylinder itself, there is however the problem of the possible non-coaxiality between the centers 5, the necks 4 (or the shoulders 3) and, consequently, with the lateral surface or with the shell of the cylinder 2. Indeed, if on one hand the necks 4 (or the shoulders 3) and the barrel 2 remain coaxial within a good tolerance even after a certain number of rolling / grinding cycles, the coaxiality between the centers 5 and the necks 4 (or the shoulders 3), and consequently between the centers 5 and the lateral surface or the shell (or said barrel) of the cylinder 2 progressively tends to worsen due to grounds that go beyond the object of the present document. The result of this phenomenon translates into in an eccentricity of the lateral surface/shell 2 of the cylinder with respect to the through axis of the centers 5. Consequently, due to this eccentricity, by supporting the cylinder between the centers 5 during the texturing processing, there will be a continuous and hard-to-predict variation of the point distance between the laser texturing head and the surface of the cylinder.

In particular, it can occur that, at specific portions of the surface of the barrel, the laser head can be found at a distance from the surface outside the tolerance range provided by the texturing process, with the consequence that the impression of the laser beam will lose the predetermined characteristics in terms of size, shape, etcetera.

The result is a non-uniform processing of the cylinder, in which areas with more or less deep texturing can be visible even with the naked eye, with the consequence of having an unacceptable quality level of the processed cylinder; in detail, a variability of the roughness Ra is detected along a single circumference in the plane perpendicular to the axis of the cylinder, where the minimum and maximum values of Ra along the circumference can be beyond the acceptability range.

Such situation is verified not only for the aforesaid condition of eccentricity caused by the non-coaxiality between the shell and the rotation axis passing through the centers 5: more generally, the surface of the shell is subjected to specific geometric tolerances, such that, for example, a generic cross section of the cylinder is not a perfectly circular profile but generally has oval appearance, within certain acceptability limits. The problem mentioned above in the case of non-coaxiality can therefore be generalized for any geometric error, to which the shell of the considered cylinder is subjected. EP2583827A2 shows an imaging apparatus with a carriage moving parallel to a surface of a drum and an imaging stage on a carriage having a sensor for measuring a distance to the surface of a flexible media mounted on the drum.

Summary of the invention

Object of the present invention is therefore that of providing an apparatus and a process of laser texturing which resolve at least one of the abovementioned drawbacks.

In addition, one object of the present invention is to provide an apparatus and a process for texturing the lateral surface or shell of a cylinder, in particular of a rolling cylinder, which are capable of operating with accuracy at high rotation speeds of the cylinder.

In particular, one object of the invention is to provide an apparatus and a process for texturing the lateral surface or shell of a cylinder, in particular of a rolling cylinder, which are capable of automatically compensating for possible eccentricities between the surface of the cylinder being process and the rotation axis defined by the centers of the cylinder itself.

Additionally, one object of the invention is to provide an apparatus and a process for texturing the lateral surface of a cylinder, in particular of a rolling cylinder, which allow obtaining a texturing that is acceptable in terms of uniformity.

In addition, an auxiliary object of the invention is to conceive an apparatus and a process for texturing the lateral surface or shell of a cylinder, in particular of a rolling cylinder, which can be easily implemented without involving costly alterations of the known systems.

One or more of the abovementioned objects are substantially attained by an apparatus according to any one of claims 1-14 or by a method according to claim 15.

Detailed description

Further characteristics of the invention will be clearer from the following detailed description. Such description will be made with reference to the enclosed drawings provided only as a non-limiting example, in which:

- Figure 1 represents a schematic view of a rolling cylinder and relative support system;
- Figure 2 is a top schematic view of one embodiment of a surface processing apparatus according to aspects of the invention;
- Figure 3 shows a detail relative to the laser emitter and to the distance sensor used in the apparatus of figure 2;
- Figures 4 to 6 are schematic views of the apparatus of figure 1 in successive operating steps;
- Figures 7 and 8 show the section of the cylindrical body being processed perpendicular to the line joining the centers and lying in two different planes. The figures also show the relative trajectory of the laser emitter with respect to the considered sections, as well as the distance Dxy between head and surface at a specific rotation angle;
- Figures 7A and 8A are a Cartesian representation of the distances Dxy pursuant to figures 7 and 8, with the variation of the angle where the cylindrical body is situated;
- Figure 9 is a Cartesian representation which shows a possible progression of an acceptability range for the distance between the laser head and the surface of the cylinder being processed; the acceptability range in the embodiment of figure 9 varies along a main direction X parallel to the axis of the cylinder, however such range could be constant along the entire longitudinal extension of the cylinder being processed;
- Figure 10 is a Cartesian representation in which, in relation to a predetermined section of the cylindrical body, the values of the distance between the laser emitter and the lateral surface of the cylindrical body are represented with the variation of the angle where the cylindrical body itself is situated; on such values, the acceptability range for said values has been superimposed, expressed as upper limit (H+h1) and lower limit (H-h2) with respect to an ideal value H; and

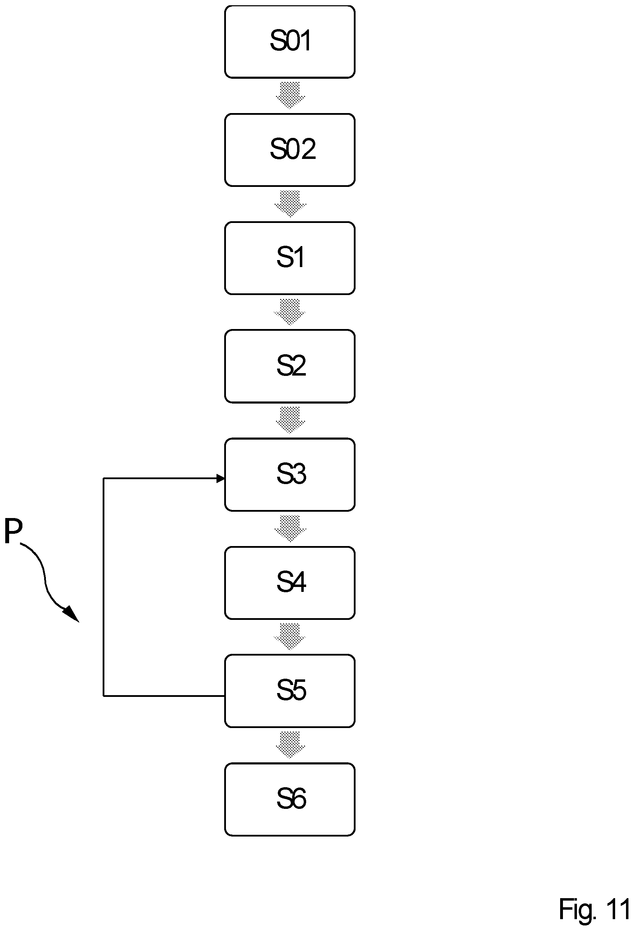

- Figure 11 is a flow diagram relative to a surface processing according to aspects of the invention, e.g. executable by the apparatus of figure 2.

DEFINITIONS AND CONVENTIONS

In the present detailed description, the corresponding parts illustrated in the various figures are indicated with the same reference numbers. The figures could illustrate the object of the invention by means of representations that are not in scale; therefore, parts and components illustrated in the figures relative to the object of the invention might only regard schematic representations.

In the present document, the following terms have the meaning indicated hereinbelow:

- texturing = processing of a smooth and uniform surface, by making close-together, minute incisions therein;
- laser texturing = is a processing of a smooth and uniform surface in which the close-together, minute incisions are made due to the use of one or more laser emitters;
- communicatively connected = with reference to a control unit with respect to another component, for expressing a wired or wireless connection that allows the control unit to communicate with the other component by sending commands and/or receiving signals;
- vector = it is intended a logic vector containing a plurality of uniform data correlated with each other and logically organized, independent of how such data is then physically stored in a memory;
- matrix = it is intended a logic matrix comprising a series of said vectors logically organized so as to form a two-dimensional array of ordered data, independent of how such data is then physically stored in a memory.

DETAILED DESCRIPTION

With reference to the enclosed figures, reference number 10 indicates an apparatus for the surface processing of a cylindrical body 1. In particular, the apparatus 10 is for example configured for carrying out the texturing of a rolling cylinder.

The apparatus 10 comprises a work station 100 defining at least one operative seat arranged to receive, in a use condition of the apparatus 10, a cylindrical body 1, for example a rolling cylinder, to be superficially processed.

The work station 100 comprises in particular a base 101 on which lateral supports 102 are for example positioned, which in turn support suitable supports 200 that engage axially opposite terminal portions of the cylindrical body 1 being processed. The supports are configured such that the cylindrical body 1 is rotatably sustained in the operative seat and can thus rotate according to a predetermined rotation axis K. For example, each of the supports 200 can comprise a respective conical body cooperating with a corresponding conical recess 5 made on one of the two head surfaces 1a of the ends of the cylindrical body 1 (fig. 2). Naturally, supports of different nature can be provided, for example by using bearings or other elements. Due to the described coupling, the rotation axis K is preferably extended in the horizontal direction, as is visible in the enclosed figures, and substantially coincides with the axis of axial symmetry of the cylindrical body 1. In reality, the rotation axis K is generally not perfectly coinciding with the axis of symmetry of the cylindrical body 1: moreover, this circumstance can become more considerable in the course of the repeated grinding and texturing processing operations, causing an eccentricity between the lateral surface 2 of the cylinder being processed and the rotation axis K. The work station 100 also comprises at least one motor member 300 configured for rotating the cylindrical body 1 at a desired angular speed, fixed or settable depending on the type of processing. The apparatus 10 comprises at least one laser emitter 600 cooperating with the work station 100 and configured for emitting at least one laser beam in the direction of said operative seat. The laser emitter 600 comprises for example a high-power laser or another laser capable of making micro-incisions on a steel surface such as that of the rolling cylinders. Of course, depending on the type of incision to be made and on the type of surface to be processed, other laser types could be used, for example: single-mode continuous fiber laser; single-mode pulsed fiber laser, CO2 laser and any other laser type adapted to achieve the present incision processing.

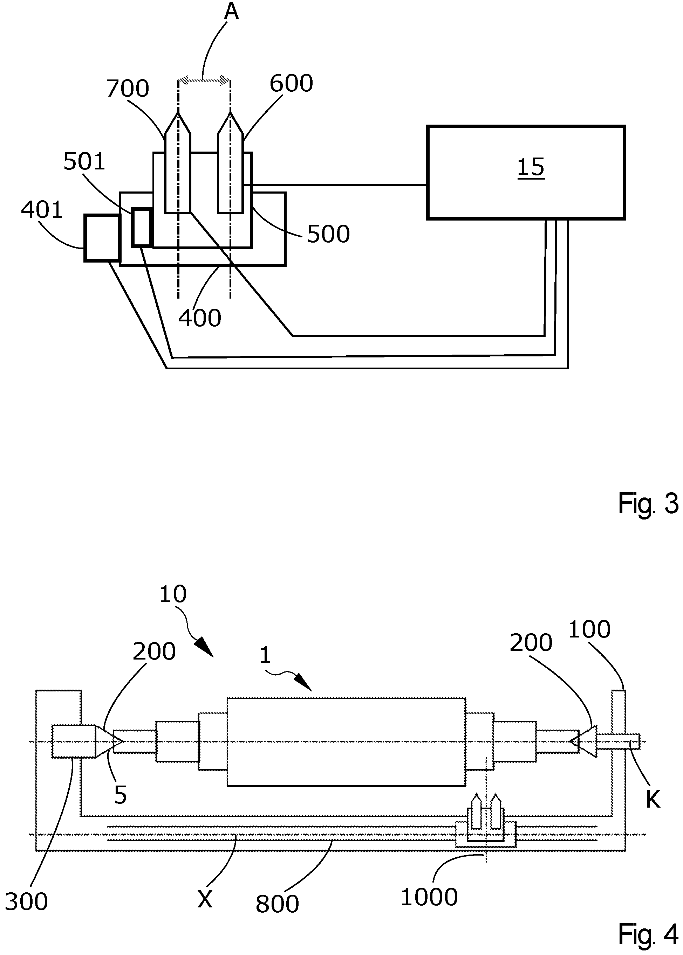

It should be observed that, without at all limiting the present invention, the apparatus 10 can comprise a plurality of laser emitters, each for example responsible for carrying out a respective surface processing of a corresponding area of competence of the surface of the cylindrical body 1 and each operating as described hereinbelow. Each laser emitter 600 is coupled to at least one distance sensor 700 arranged in a predetermined positional relationship with respect to the laser emitter 600: as detailed hereinbelow, the laser emitter 600 and the sensor can be carried by a same support and thus be constantly situated in the same relative position with respect to each other. Generally, the distance A between these two components (fig. 3) measured along the axis of the cylinder being processed is on the order of a few tens of millimeters, for example 50 mm, or 70 mm, or similar values. Alternatively, distance sensor 700 and laser emitter 600 can be carried by respective supports which in any case will be driven so as to maintain a positional relationship with each other.

The distance sensor 700 is configured for detecting a control parameter relative to a distance of the sensor itself or of the laser emitter 600 from a lateral surface 2 of the cylindrical body 1 placed rotating in the operative seat. The distance sensor 700 is preferably of laser type; alternatively, inductive, capacitive or ultrasound distance sensors can be used, or distance sensors of another type can be used, in any case capable of detecting a parameter relative to the distance of the sensor or of the emitter from the surface of the body being processed. For example, the sensor can comprise an emitter/receiver of signals and hence detect the delay or the phase shift between the emitted signal and the signal reflected by the cylindrical body 1 and emitting a corresponding detection signal tied to the distance between the sensor itself and the lateral surface of the cylindrical body 1 being processed.

As is visible in the enclosed figures, the apparatus 10 also comprises a guide 800 adjacent to the work station 100, and for example constituting part of the latter, and extended along said main direction X: the guide 800 is arranged parallel to the axis K of the cylinder at least for the entire axial extension of the operative seat and hence of the cylinder being processed. A conveying support 400, for example a carriage or a slide or a movable plate, is mounted on the guide 800 so as to translate along the guide 800 itself. A command member, schematically represented by the block 401 in fig. 3 and for example a hydraulic, electric or pneumatic actuator, or an actuator of another type, is active on the conveying support 400 in order to move the conveying support 400 on the guide 800 along the main direction X. In an optional solution, the command member 401 provides for at least one linear electric motor: nevertheless, as mentioned above, other types of actuators can be used such as, for example the commands with motors and ball recirculation screws as long as they ensure high precision of the movements and high speed of the commands set by the control unit 15, as will be better described hereinbelow. The distance sensor 700 and the laser emitter 600 are both carried by the conveying support 400 and, optionally, the distance sensor 700 is placed adjacent at a predetermined (and preferably reduced) distance from the laser emitter 600. Alternatively, the distance sensor 700 can be at a certain distance from the emitter, but in such case it will be necessary to account for the distance between these two components in the correction of the distance described hereinbelow. It should be observed that in one variant, the sensor 700 and the laser emitter 600 could be mounted on respective conveyor supports 400 controlled so as to translate on said guide 800 or on guides parallel to the main direction X: in such case, however, the movement of the supports will have to be suitably synchronized so as to maintain distance sensor 700 and relative laser emitter 600 in a known positional relationship.

In the embodiment illustrated in the enclosed figures 2-6, the distance sensor 700 is placed adjacent to the laser emitter 600. Preferably, the distance sensor 700 is placed in close vicinity to the laser emitter, alongside the laser emitter on the side of the movement sense of the main support along the main direction X.

It should also be observed that both the laser emitter 600 and the sensor 700 are carried by the conveying support 400 upon interposition of an intermediate body 500, in turn that is movable relative to the conveying support 400 at least along an auxiliary direction Z which is directed transverse to the main direction X, in particular perpendicular to the main direction X, such that a movement of the intermediate body 500 causing a radial moving away or approaching of the distance sensor 700 and of the emitter 600 with respect to the lateral surface 2 of the cylindrical body 1 being processed. In the alternative in which the distance sensor 700 and the emitter are mounted on respective conveyor supports, then between distance sensor 700 and respective conveying support 400 and between laser emitter 600 and respective conveying support 400, a respective intermediate body 500 would be provided for. Each intermediate body 500 would in such case be coupled to the respective conveying support 400 in a movable manner along an auxiliary direction Z directed transverse to the main direction X and in particular perpendicular to the main direction X.

In order to allow the relative movement between conveying support 400 and intermediate body 500 along the auxiliary direction Z, the apparatus 10 comprises an adjustment member, identified as schematic block 501 in fig.2, active at least on the intermediate body 500, optionally interposed between the intermediate body 500 and the conveying support 400, and configured for moving the intermediate body 500 relative to the respective support along the auxiliary direction Z.

The apparatus 10 comprises, as already mentioned above, the control unit 15 which is connected with the distance sensor 700, with the laser emitter 600, with the motor member 300, with the command member 401 and with the adjustment member 501 described above in order to coordinate and control the actions thereof in a manner so as to effectively carry out the surface processing of the cylindrical body 1. In particular, the control unit 15 is configured for commanding the motor member 300 and rotating the cylindrical body 1 around its rotation axis K during the execution of said correction procedure. The control unit 15 is also communicatively connected with the command member 401 for commanding the movement of the laser emitter 600 and of the distance sensor 700 along the main direction X. The control unit 15 is also communicatively connected with the adjustment member 501 in order to correct the position of the laser emitter 600 and of the distance sensor 700 along the auxiliary direction Z. Finally, the control unit 15 is set to command the laser emitter 600 in order to cause, at least during a predetermined travel along said main direction X of the laser emitter 600, the emission of a laser beam directed towards a surface of the cylindrical body 1 rotating in the operative seat, consequently allowing a surface processing of the cylindrical body 1 itself.

In further detail, and in accordance with aspects of the present invention, the control unit 15, in addition to commanding the movement of the laser emitter 600 and of the distance sensor 700 along said main direction X and the emission of a laser beam directed towards a surface of the cylindrical body 1 rotating in the operative seat, is also configured for executing a correction procedure aimed to compensate for any possible eccentricity between the lateral surface 2 of the cylindrical body 1 and the rotation axis K.

In particular, the correction procedure executed by the control unit 15 during the processing comprising the following steps:

-    receiving a plurality of detection signals from the distance sensor 700,
-    on the basis of the detection signals, determining corresponding distance values of the sensor or of the laser emitter 600 from the lateral surface 2 of the cylindrical body 1,
-    then evaluating if said distance values meet or do not meet a predetermined acceptability criterion, and
-    if one or more of the distance values does not meet the predetermined acceptability criterion, correcting at least one position of the laser emitter 600 along the auxiliary direction Z, for example by actuating the adjustment member 501 and determining a suitable adjustment of the position of the emitter in auxiliary direction Z aimed to compensate for an excessive eccentricity.

In practice, each detection signal coming from the distance sensor 700 relates to a respective angular position taken by the cylindrical body 1 in said operative seat, and hence the control unit 15, by acquiring a plurality of detection signals relative to different angular positions of the cylindrical body 1, is capable of understanding if the section of the cylindrical body 1 under examination shows or does not show an excessive eccentricity with respect to the rotation axis K.

In accordance with a further aspect, the control unit 15, in the step of receiving the detection signals from the distance sensor 700, is configured for receiving a plurality of detection signals from the distance sensor 700 for each complete rotation of the cylindrical body 1 around said rotation axis K and hence determining, for each complete rotation of the cylindrical body 1 around said rotation axis K, a respective distance value for each of the predetermined angular positions taken by the cylindrical body 1. In particular, the control unit 15 can be configured for acquiring a respective distance value for each detection signal emitted by the distance sensor 700 and relative to each of a plurality of predetermined angular positions taken on during a same complete rotation of the cylindrical body itself.

In this manner, for each rotation, the control unit 15 acquires a plurality of distance values and hence can determine, with extreme accuracy, the possible presence of eccentricity and carry out the necessary correction operations by acting on the adjustment member 501 in real time during the movement of the laser emitter 600 and of the distance sensor 700 along the main direction X.

In more detail, it should be observed that the apparatus 10 can comprise an angular position detector, optionally comprising at least one encoder for example fit on the rotation axis of the cylindrical body 1 and capable of recognizing the angular position of the cylindrical body itself. The angular position detector is also communicatively connected with the control unit 15 which, at predetermined angular positions $(\alpha_1, \alpha_2, ... \alpha_n)$ of the cylindrical body 1 rotating in the operative seat, records the distance value between the sensor 700 and the cylindrical shell 1. Alternatively, an angular position detector can be provided which emits a corresponding signal upon reaching the predetermined angular positions, with the control unit configured for receiving the position signals from the angular position detector, optionally also determining the angular position of the cylindrical body 1 on the basis of the position signals, and for interrogating the distance sensor 700 upon receiving each (or a predetermined number) of the angular position signals.

In each case, the control unit 15 samples and receives detection signals of the distance, each corresponding to a predetermined angular position of the angular positions $(\alpha_1, \alpha_2,... \alpha_n)$ taken by the cylindrical body 1, which are optionally angularly equidistant from each other; in this manner, the control unit 15 can for example sample the distance detection signals every 90° or every 60° or every 45° or every 30° or every 15° (of course samplings that are even closer together can also be provided) of rotation of the cylindrical body 1, consequently involving the sampling frequency of the distance detection signal.

In practice, the control unit 15 can be configured for interrogating, a plurality of times, the distance sensor 700 for each complete rotation of the cylindrical body 1 (for example at least 4 or at least 8 or at least 16 or multiple times per revolution) and in order to therefore receive a plurality of corresponding detection signals, each relative to a respective plurality of predetermined angular positions $(\alpha_1, \alpha_2, ... \alpha_n)$ taken by the cylindrical body 1 at each rotation.

Therefore, the control unit 15 can determine a plurality of distance values (of the distance sensor 700 and hence of the emitter 600 adjacent thereto) for each complete rotation of the cylindrical body 1 around the rotation axis K, where each distance value relates to a respective angular position of the angular positions $(\alpha_1, \alpha_2, ... \alpha_n)$ taken by the cylindrical body 1 during each complete rotation of the cylindrical body 1 around the rotation axis K.

Once the distance values relative to one or more complete revolutions of the cylindrical body 1 are available, the control unit 15 can determine if such distance values meet or do not meet the predetermined acceptability criterion mentioned above, hence establishing if there is an excessive eccentricity or not. For example, the control unit 15 can be configured for checking if one or more distance values relative to a predetermined number of complete rotations of the cylindrical body 1, optionally relative to a same complete rotation of the cylindrical body 1, around the rotation axis K, fall within a pre-established acceptability range comprised between a minimum distance value and a maximum distance value from the lateral surface 2 of the cylindrical body 1. If, following such verification, the control unit 15 establishes that, for one or more angular positions of the cylindrical body 1, the measured distance falls outside the acceptability range, the control unit 15 can consequently command the movement of the distance sensor 700 and above all of the laser emitter 600 according to the auxiliary direction Z, in a manner so as to bring back all the distances within the acceptability range.

In accordance with a further aspect, the control unit 15 is configured for storing the distance values relative to a same rotation of the cylindrical body 1 in a corresponding vector V.

In accordance with a further aspect, the control unit 15 determines a plurality of said vectors and forms a matrix M comprising said plurality of the abovementioned vectors: each vector V comprises the plurality of distance values determined for a respective complete rotation of the cylindrical body 1 around the rotation axis K.

In more detail, in an initial step the sensor and the laser emitter 600 are not moved along the main direction X and the control unit 15 provides to collect, multiple times and cyclically, the distance values determined for a same section of the cylindrical body 1 and relative to the same complete rotation of the cylindrical body 1 around the rotation axis K, thus creating an initial matrix M with m vectors V relative to the same section of the cylindrical body 1.

In other words, the distance samples acquired at the angles $\alpha_1, \alpha_2, ... \alpha_n$, are stored in a respective numeric vector V for each complete revolution of the cylindrical body 1. When the cylindrical body 1 has complete a complete rotation, the acquisition continues, on the same section of the cylinder (hence with emitter and sensor stopped), storing other distance data (at the same angles $\alpha_1, \alpha_2, ... \alpha_n$) in a successive vector V. In this manner, a matrix M of the distances is constructed, containing data relative to a same section of the cylinder, where the measurements are repeated "m" times. Each of the m columns of the matrix M represents a vector containing 'n' distance measurements.

| | V1 | V2 | ... | Vm |
|---|---|---|---|---|
| $\alpha_1$ | D11 | D12 | | D1m |
| $\alpha_2$ | D21 | D22 | | D2m |
| ... | | | | |
| $\alpha_n$ | Dn1 | Dn2 | | Dnm |

Initial matrix M of the distances

Hence, $D_{nm}$ will be the distance detected by the distance sensor 700 at the angle $\alpha_n$ at the m-th revolution of the cylindrical body 1.

Then, the texturing processing starts; therefore the laser emitter 600 is activated and the emitter itself and the distance sensor 700 are moved along the main direction X .The control unit 15 then constructs mew vectors V, no longer relative to the same section, but to axially consecutive helices (such being the trajectories both of the impression of the laser beam emitted by the emitter and of the signal emitted by the sensor following the rotary movement of the cylindrical body 1 and of the movement along the main direction X of the sensor and of the emitter) of the cylindrical body 1 which come to progressively modify and update the initial matrix M.

In an initial step, therefore, the matrix M will only comprise vectors with distance values determined for a respective complete rotation of the cylindrical body 1 around the rotation axis K and all relative to only one section (for example end section) of the cylindrical body 1. Subsequently, the matrix M will be updated with each revolution of the cylinder and a new vector V will be added thereto on the right side, while the first vector V on the left side will be canceled. In this manner, the matrix M preserves its dimensions and new data is updated as the processing progresses. At a certain point, after a predetermined number of rotations of the cylindrical body 1, the matrix M will only comprise a plurality of vectors relative to axially consecutive helices of the cylindrical body 1.

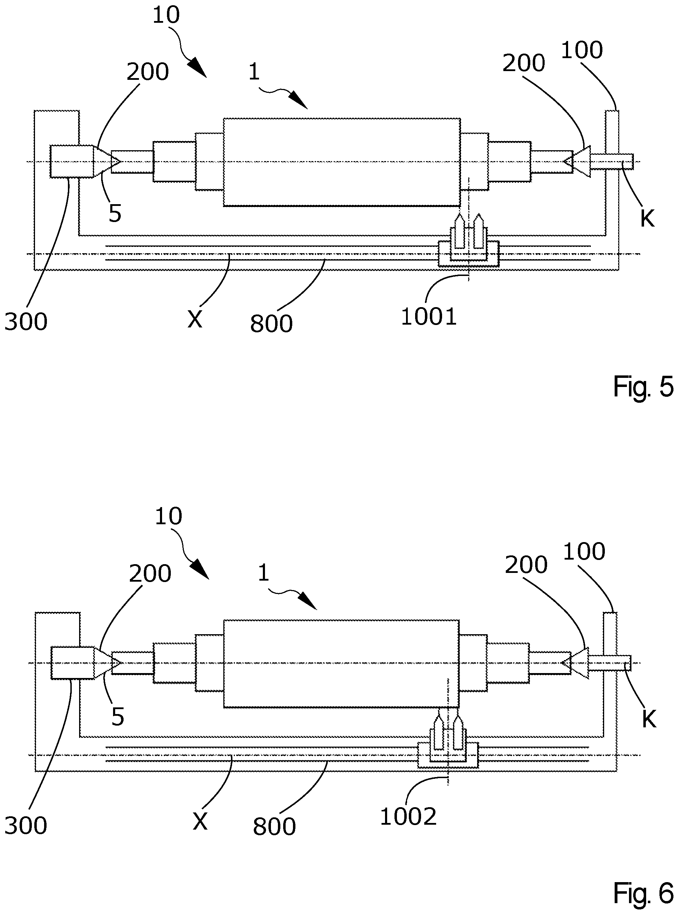

In order to better illustrate that stated above, reference is made to figures 4-6. Initially, the control unit 15 commands the conveyor member 400, and hence the distance sensor 700, to be moved from a rest position to a starting position (indicated with 1002 in figure 6). The control unit 15 maintains the distance sensor 700 in the starting position during the completion of a plurality of complete rotations of the cylindrical body 1 around the rotation axis K and then constructs the initial matrix M as follows. Initial vectors are determined, in which each initial vector V comprises the plurality of distance values determined for a respective complete rotation of the cylindrical body 1 around the rotation axis K: the initial vectors are all relative to the same section of the cylindrical body 1 corresponding to the starting position. The initial matrix M is formed, which comprises the abovementioned initial vectors relative to the same section of the cylindrical body 1 corresponding to said starting position.

In this step, i.e. until the distance sensor 700 is in starting position, the control unit 15 is configured for commanding the laser emitter 600 to not emit any laser beam directed towards the surface of the cylindrical body 1. After a certain number of revolutions 'm', the control unit 15 has then constructed the initial matrix M (reported above in tubular form, as an example) of 'm x n' elements comprising 'm' vectors V, each having 'n' distance values, detected on a same section.

At this point, the control unit 15 can command the movement of the laser emitter 600 and of the distance sensor 700 along the main axis, also activating the emission of the laser beam by the emitter which will then make a processing on the surface of the cylindrical body 1, following a helical trajectory given by the combination of the rotary motion of the cylindrical body 1 around the axis K and of the translational motion of the emitter along the trajectory X; during such movement, the control unit 15 determines a plurality of updating vectors: each updating vector V comprises the plurality of distance values determined for a respective complete rotation of the cylindrical body 1 around the rotation axis K. Different from the initial vectors, the updating vectors are relative to axially consecutive helices of the cylindrical body 1 intercepted by the distance sensor 700 during the movement of the laser emitter 600 and of the same sensor along the direction X. The control unit 15 then provides for updating the matrix M, progressively substituting the initial vectors with updating vectors; in particular, the control unit 15 provides for substituting, each time an updating vector V is available, the initial vector V that has been present in the matrix M for more time. In summary: the control unit 15 can update the matrix M and consequently the vector V with each revolution, or with each 'k' revolutions, of the cylindrical body 1. Such updating occurs by discarding the oldest vector (m=1) contained in the matrix M, and introducing a new vector (m+1th). As stated above, the new column to be added to the matrix M of the distances can be acquired with each revolution of the cylinder, thus obtaining a matrix M whose columns are referred to pitches of the helix that are adjacent to each other; however, considering that the pitch of the helix is generally very small, it is preferable to acquire the new vector V with lower frequency, allowing several (k) revolutions of the cylinder to pass between one acquisition and the next, so as to suitably space apart the samples themselves along the surface of the cylinder.

The matrix M as constructed above serves for checking if the surface of the cylindrical body 1 is actually (section by section or helix by helix) eccentric with respect to the rotation axis. Due to the creation of the matrix M, and in accordance with a further aspect, the control unit 15 constructs an acceptability criterion which is not affected by possible errors of point reading of the distance, nor by possible localized irregularities of the surface of the cylindrical body 1 (for example due to the presence of undesired particles adhered to the surface itself).

In particular, once the matrix M is calculated at a certain section or helix of the cylindrical body 1, the step of determining if the distance values meet a predetermined acceptability criterion provides for determining first of all an entire plurality of normalized distance values: each normalized distance value is a function of the distance values, present in matrix M, relative to the same rotation angle of the cylindrical body 1 and pertaining to distinct rotations of the cylindrical body 1 around the rotation axis (K). In particular, each normalized distance value is the mean of the distance values present in the matrix M and relative to the same rotation angle of the cylindrical body 1. For example, each normalized distance value is the mean of at least 80% of the distance values (the control unit 15 can for example be configured for discarding the maximum and minimum values or clearly incorrect values) present in said matrix M, relative to the same rotation angle of the cylindrical body 1,

In other words, the control unit 15 is configured for executing a processing of the lines 1, 2, ... n, of the matrix M, determining a normalized vector V, in which the element corresponding to the angle $\alpha_n$, is given by the mean of the values $D_{n1}$, $D_{n2}$,... $D_{nm}$ detected by the distance sensor 700 and present in the matrix M: the algorithm calculates the mean of the m distance measurements carried out at the alpha i-th angle:

|  | normalized V |
|---|---|
| $\alpha_1$ | $D1v = 1/m \sum_{i=1}^{m} D1i$ |
| $\alpha_2$ | $D2v = 1/m \sum_{i=1}^{m} D2i$ |
| ... | |
| $\alpha_n$ | $Dnv = 1/m \sum_{i=1}^{m} Dni$ |

Normalized Vector V

The normalized vector V then provides, at a certain section or helix in which the control is carried out, the values to be used for each angle so as to check if the distances thus calculated meet the acceptability criterion. Due to the normalized vector V, one avoids that the measurement is effected by localized effects, as discussed above.

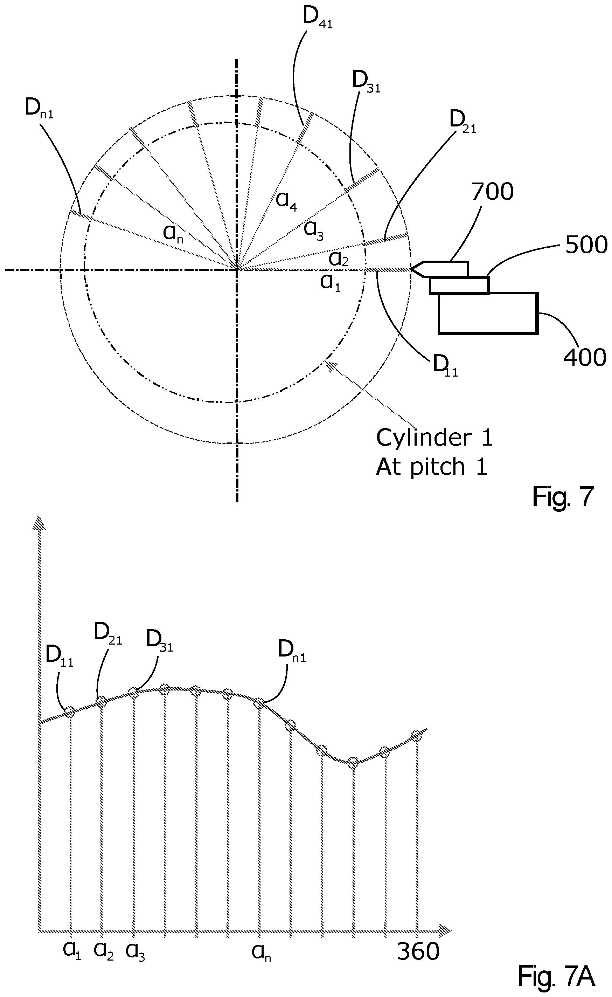

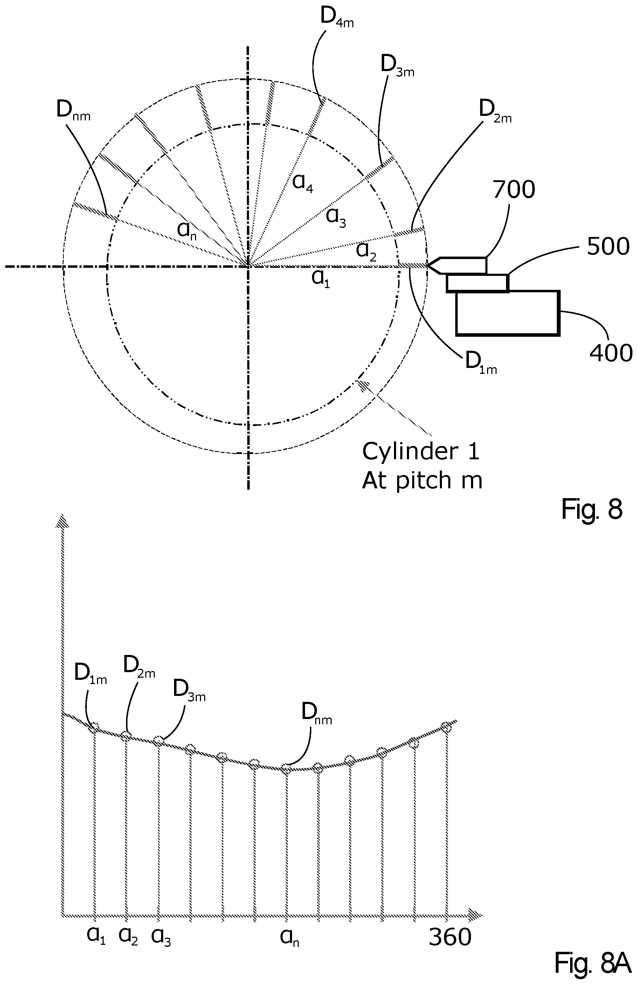

The control unit 15, once the normalized vector V is determined, is also configured for checking if one or more normalized distance values fall within a pre-established acceptability range comprised between a minimum distance value and a maximum distance value from the lateral surface 2 of the cylindrical body 1. Alternatively, for the verification the control unit 15 can use the vector V relative to the latter rotation, giving up however the benefits of the normalized vector V. Figures 7 and 7A show the distances $D_{11}$, ...$D_{n1}$ of the vector V (e.g. normalized) relative to a first section or helix of the cylindrical body 1 (pitch 1), while Figures 8 and 8A show the distances $D_{1m}$, ...$D_{nm}$ of the vector V (e.g. normalized) relative to an m-th section or helix of the cylindrical body 1 (pitch m).

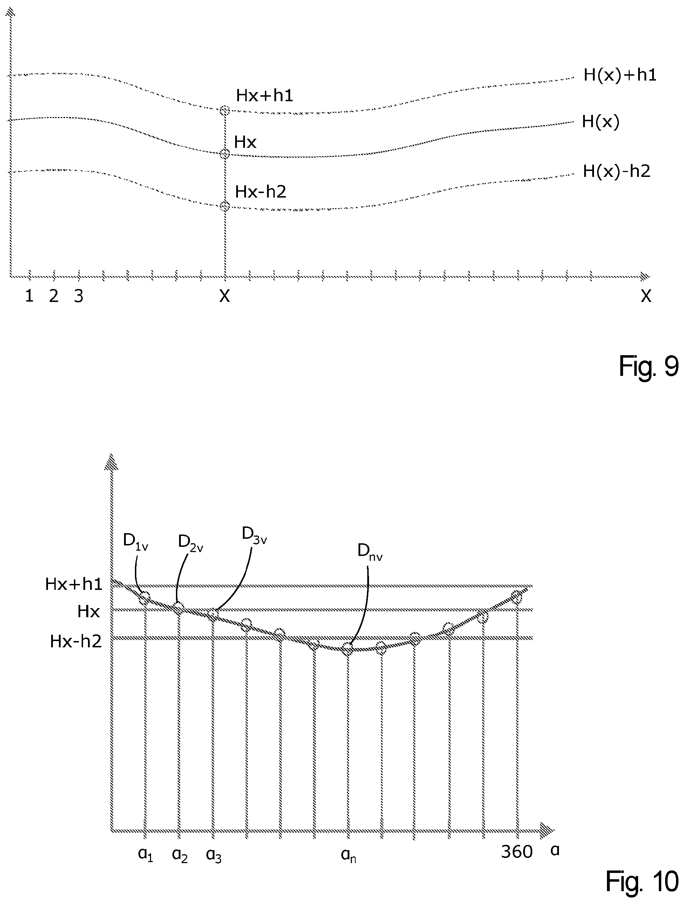

The acceptability criterion for the distance measurements can be configured as follows. The control unit 15 can receive or load, from a memory connected with the control unit 15, a desired distance value Hx between the laser emitter 600 and the lateral surface 2 of the cylindrical body 1 which must always be maintained constant during the movement of the laser emitter, in particular along its travel in the main direction X. The control unit 15 then determines the maximum distance value deemed acceptable as sum between the desired distance value Hx and a first tolerance h1. Analogously, the control unit 15 can determine the minimum distance value as difference between the desired distance value Hx and a second tolerance h2. It is observed that, optionally, the value of the first tolerance h1 and of the second tolerance h2 can be equal, thus defining a symmetric acceptability range around the value Hx (fig. 9). In turn, the desired distance value Hx between the laser emitter 600 and the lateral surface 2 of the cylindrical body 1 can be a constant value along the main direction X or a variable value according to a predetermined variability law along said main direction X (fig. 9). The variation of the distance H involves a variation of the work point of the laser emitted by the emitter, i.e. of the focusing conditions and hence of the characteristics of its impression on the surface of the cylindrical body 1, and in particular a variation of the distribution of the optical power density at the impression. This phenomenon can be exploited in order to vary the characteristics of the texturing along the axis of the cylindrical body 1 being processed, for example in order to account for the different pressures that will be present during the operation in the rolling mill on the surface of the cylindrical body 1: for example, it may be suitable to obtain a texturing with specific characteristics for the zones of the cylindrical body 1 that will be subjected to greater pressures, which could the central zones, differing the texturing from that which will be achieved on the zones that will be subjected to lower pressures, which could be the end zones.

Once - for a certain position along the axis X of the emitter - it is established that it is necessary to make a correct since at least one distance value does not fall within the acceptability criterion (using for example the values of the normalized vector V and comparing them with the acceptability range (Hx-h2) ÷ (Hx+h1)), the control unit 15 commands the step of correcting the position of the emitter and, generally, also of the distance sensor 700. In particular, the operation of correcting the position of the laser emitter 600 along the auxiliary direction Z provides for moving the laser emitter 600 close to the lateral surface 2 of the cylindrical body 1 if it results that one or more of the distance values or one or more of the normalized distance values are greater than the maximum distance value. Vice versa, the operation of correcting the position of the laser emitter 600 along the auxiliary direction Z provides for moving the laser emitter 600 away from the lateral surface 2 of the cylindrical body 1 if it results that one or more of the distance values or one or more of the normalized distance values are lower than the minimum distance value. In more detail, the control unit 15 executes a comparison between the elements of

the vector Vnormalized = $[D_{1v}, D_{2v}, ... D_{xv}, ..., D_{nv}]$ and the interval $(Hx-h2) \div (Hx+h1)$. With reference to figure 10, if the element $D_{xv}$ is greater than $(Hx+h1)$, the conveying support 400 (which supports at least the laser emitter 600 and preferably both the laser emitter 600 and the distance sensor 700) is moved close to the surface of the cylindrical body 1 with a movement in absolute value for example equal to $(D_{xv} - Hx)$. If the element $D_{xv}$ is less than $(Hx-h2)$, the conveying support 400 is moved away from the surface of the cylindrical body 1 with a movement in absolute value equal to $(Hx - D_{xv})$. In figure 10, the points calculated at the angles $\alpha_n$, $\alpha_{n-1}$, $\alpha_{n+1}$, result outside of the tolerance range $(Hx+h1) \div (Hx-h2)$: at these points, therefore, the system will intervene for correcting the position of the laser emitter 600, moving the conveying support 400 away from the surface of the cylindrical body 1.

As already mentioned above, during the surface processing, the control unit 15 is configured for commanding the movement of the laser emitter 600 and of the distance sensor 700 in a plurality of successive positions along the main direction X. During such movement, the control unit 15 repeats the correction procedure (with the frequency that is deemed opportune for the specific application) at a multiplicity of successive positions taken by the emitter and/or by the distance sensor 700 along the main direction X. In this manner, even if the cylindrical body 1 while rotating can have a lateral surface 2 that is actually eccentric with respect to the actual rotation axis, the control unit 15 is capable of effectively correcting, in a timely manner, such eccentricity by suitably moving the laser emitter 600.

It should be observed that the apparatus 10 can comprise a plurality of laser emitters and relative distance sensors controlled by the control unit 15 as described above and as claimed below.

After that described above from a mainly structural standpoint, a process for the surface processing of a cylindrical body 1 according to the aspects of the invention will now be described.

In accordance with one aspect of the invention, the process for surface processing of cylindrical bodies, in particular for the surface texturing of rolling cylinders, uses the above-described apparatus 10 and is therefore executed under the supervision and control of the control unit 15.

In practice, without having to repeat in detail all of the steps of the process, regarding which reference is made to the steps executed by the above-described control unit 15, it should be observed that the process for surface processing of the cylindrical body 1 provides, normally after a step of grinding the cylindrical body itself (step S01), for rotating the cylindrical body 1 in the operative seat of the apparatus 10 (step S02). After having created the initial matrix M, maintaining both laser emitter 600 and distance sensor 700 in a starting position (step S1), the movement is commanded of the laser emitter 600 and of the distance sensor 700 along said main direction (X): with the movement of the laser emitter 600, the emission of a laser beam is also activated, directed towards a surface of the cylindrical body 1 rotating in the operative seat, consequently allowing a surface processing of the cylindrical body itself, and achieving the desired texturing (step S2). During the travel of the laser emitter 600 along the main direction X, the correction procedure can be repeated when necessary (i.e. in an asynchronous manner) or at regular intervals or following a predetermined number of complete revolutions of the cylindrical body. The correction procedure (cyclically-repeated procedure P) provides for the various steps and substeps already described with reference to the apparatus 10 and in particular for example the updating of the matrix M (step S3), the verification that the distances, e.g. normalized, of the reference vector are at the acceptability criterion (step S4) and the possible correction of the distance between the emitter and the lateral surface of the cylinder along the auxiliary axis Z (step S5). As stated above, this correction cycle is carried out when suitable, and hence even multiple times during a single rotation of the cylinder. Once the processing is completed, the control unit stops all of the operations of the apparatus in order to allow picking up and unloading the processed cylindrical body (step S6).

A computer program can for example be used on an apparatus 10 for the surface processing of cylindrical bodies in order to suitably program the control unit 15 of such apparatus 10 to execute the above-described operations. In particular the computer program is a software product that comprises instructions which, when the program is executed by a computer or digital control unit, configure such computer as the control unit 15 of the apparatus 10 described above and/or claimed, this rendering such apparatus 10 capable of executing the process described above and/or claimed.

In accordance with aspects of the invention, a data support is also provided for storing the abovementioned computer program; for example the data support can be or comprise a mass memory such as a hard disk of any nature, a rewritable memory, a volatile memory, a data carrier signal, a memory that is remote with respect to the control unit 15, or a memory of any other kind.

CONTROL UNIT

The apparatus and the process described and claimed herein use at least one control unit 15 set to control operating conditions implemented by the same plant/apparatus and to control the steps of the process. The control unit 15 can be a single unit or it can be formed by a plurality of separate control units 15 depending on the design selections and on the operating requirements.

With the term control unit 15 it is intended a component of electronic type which comprises at least one of the following: a digital processor (CPU), a circuit of analog type, or a combination of one or more digital processors with one or more circuits of analog type.

The control unit 15 can be "configured" or "programmed" for executing several steps: in practice this can be achieved with any means that allows configuring or programming the control unit 15. For example, in the case of a control unit 15 comprising one or more CPUs and one or more memories, one or more programs can be stored in suitable memory banks connected to the CPU or to the CPUs; the program or programs (software or firmware for example) contain instructions which, when executed by the CPU or by the CPUs, program or configure the control unit 15 to execute the operations described in relation to the control unit 15. Such programs can be written in any one programming language of known type. The CPUs, if two or more in number, can be connected to each other by means of a data connection such that their computing powers are shared in any manner; the CPUs themselves can be installed in positions that are also geographically different, by means of the aforesaid data connection achieving a distributed computing environment. The CPUs can be a processor of general purpose type, configured for executing one or more parts of the process or of the steps described or claimed herein, the program software or firmware, or be an ASIC or dedicated processor, or a FPGA, specifically programmed for executing at least part of the operations described herein. The memory support can be non-transient and can be inside or outside the CPUs, and specifically it can be a memory geographically situated remotely with respect to the computer. The memory support can also be physically divided into multiple portions, or into "cloud" form, and the software program or firmware can physically provide for portions stored on memory portions that are geographically separate from each other.

Alternatively, if the control unit 15 is or comprises circuitry of analog type, then the circuit of the control unit 15 can be designed for including circuitry configured, during use, for processing electrical signals so as to execute the steps relative to the control unit 15.

In a preferred embodiment of the invention discussed herein, the control unit is set for operating the entire apparatus and comprises the hardware and software resources necessary for the execution of all the functions necessary for processing and for control, described above. In particular, in a non-limiting example, the control unit comprises at least three different types of processors or CPUs:

- a first CPU, usually called CNC (Computer Numerical Control), is dedicated to defining the movements of the various movable parts of the apparatus as a function of the input signals coming from the sensors present (Encoders or others). This CPU is provided with memory cells and is able to manage the writing of the vectors V and the composition of the matrix M;
- a second CPU whose main tasks are those of mass archiving system and of managing a man - machine interface, for commanding and monitoring the execution of the operations, as well as for the maintenance and diagnostics of the apparatus;
- the third CPU, usually termed PLC (Programmable Logic Controller), is instead involved with the management of the signals, with the execution of commands of the auxiliary systems (pumps, valves, contacts) and with the safety (end stop, protections, maintenance requirements).

As already mentioned above, even if in one embodiment the functions described are executed by multiple CPUs, each having a respective sub-set of distinct functions assigned thereto, the apparatus can alternatively provide for a single control unit which is involved with all of the functions that are briefly described above.

**Claims**

1.  Apparatus for the surface processing of cylindrical bodies, in particular for the surface texturing of rolling cylinders, comprising:

    - a work station (100) defining at least one operative seat arranged to receive, in a use condition of the apparatus, a cylindrical body (1) to be superficially processed, said work station (100) being configured for rotatably supporting the cylindrical body (1) according to a predetermined rotation axis (K),
    - at least one laser emitter (600) cooperating with the work station (100) and configured for emitting at least one laser beam in the direction of said operative seat, said laser emitter (600) being movable at least along a main direction (X) substantially parallel to the rotation axis (K) of the cylindrical body (1) and according to an auxiliary direction (Z) transverse to said main direction (X),
    - at least one distance sensor (700) arranged in a predetermined positional relationship with respect to the laser emitter (600) and configured for detecting a control parameter relative to a distance of the sensor itself or of the laser emitter (600) from an external lateral surface of the cylindrical body (1) positioned, in said use condition, in the operative seat and emitting a corresponding detection signal,
    - a control unit (15) communicatively connected with the laser emitter (600) and with the distance sensor (700), wherein said control unit (15) is configured for executing, during said use condition of the apparatus, at least the following steps:

      ○ commanding a movement of the laser emitter (600) and of the distance sensor (700) along said main direction (X),
      ○ commanding, at least during a predetermined travel along said main direction (X) of the laser emitter (600), the emission of a laser beam directed towards a surface of the cylindrical body (1) rotating in the operative seat, consequently allowing a surface processing of the cylindrical body (1) itself,

∘ executing a correction procedure comprising the following steps:

▪ receiving one or more detection signals from the distance sensor (700), each detection signal being relative to a respective angular position taken by the cylindrical body (1) in said operative seat,

▪ based on said detection signals, determining corresponding distance values of the distance sensor (700) or of the laser emitter (600) from the lateral surface of the cylindrical body (1) rotating in said operative seat,

▪ determining if said distance values meet a pre-established acceptability criterion,

▪ if one or more of said distance values do not meet the predetermined acceptability criterion, correcting at least one position of the laser emitter (600) along the auxiliary direction (Z);

whereby said control unit (15) is further configured for:

- determining a plurality of said distance values for each complete rotation of the cylindrical body (1) around the rotation axis (K), each distance value being relative to a respective of pre-established angular positions ($\alpha_1$, $\alpha_2$,... $\alpha_n$) taken by the cylindrical body (1) during each complete rotation of the cylindrical body (1) around the rotation axis (K),

- storing, in a corresponding vector (V), the distance values determined for a same complete rotation of the cylindrical body (1) around the rotation axis (K),

- determining a plurality of said vectors, wherein each vector (V) comprises the plurality of distance values determined for a respective complete rotation of the cylindrical body (1) around the rotation axis (K), and

**characterized in that** said control unit (15) is further configured for:

- forming a matrix (M) comprising said plurality of said vectors;

wherein each of the vectors (V) of said matrix (M) comprises a plurality of distance values determined for a respective complete rotation of the cylindrical body (1) around the rotation axis (K) and relative to a respective section of the cylindrical body (1),

wherein the matrix (M) is configured to serve for checking if the surface of the cylindrical body (1) is actually eccentric with respect to the rotation axis, and wherein due to the creation of the matrix (M), the control unit (15) is further configured to construct an acceptability criterion which is not affected by possible errors of point reading of the distance, nor by possible localized irregularities of the surface of the cylindrical body (1).

2. Apparatus according to claim 1, wherein said receiving step provides for receiving a plurality of said detection signals from the distance sensor (700) for each complete rotation of the cylindrical body (1) around said rotation axis (K); and/or

wherein said step of determining the distance values provides for determining, for each complete rotation of the cylindrical body (1) around said rotation axis (K), a respective distance value for each of the pre-established angular positions taken by the cylindrical body (1), in particular a respective distance value relative to each of the pre-established angular positions taken by the cylindrical body (1) in a same complete rotation of the cylindrical body (1).

3. Apparatus according to any one of the preceding claims, wherein

said receiving step provides for receiving a plurality of detection signals from the distance sensor (700) for each complete rotation of the cylindrical body (1) around said rotation axis (K) relative to the same section of the cylindrical body (1), and wherein said step of determining the distance values provides for determining, for each complete rotation of the cylindrical body (1) around said rotation axis (K), a plurality of distance values relative to the same section of the cylindrical body (1); and/or

wherein the apparatus comprises at least one angular position detector, optionally comprising at least one encoder, said at least one angular position detector being communicatively connected with the control unit (15) and being configured for emitting one or more position signals relative to the angular position of the cylindrical body (1) rotating in the operative seat, in particular signaling to the control unit (15) the angular position of the cylindrical body (1) in a continuous manner and in real time.

4. Apparatus according to any one of the preceding claims, wherein said step of receiving one or more, in particular a plurality, of said detection signals from the distance sensor (700) comprises:
interrogating said distance sensor (700) in order to receive corresponding detection signals relative to pre-established angular positions ($\alpha_1$, $\alpha_2$,... $\alpha_n$) taken by the cylindrical body (1);

in particular wherein said control unit (15) is configured for interrogating, a plurality of times, the distance sensor (700) for each complete rotation of the cylindrical body (1) and for then receiving a plurality of corresponding detection signals relative to a respective plurality of pre-established angular positions ($\alpha_1$, $\alpha_2$,... $\alpha_n$) taken by the cylindrical body (1) at each rotation; optionally wherein the pre-established angular positions ($\alpha_1$, $\alpha_2$, ... $\alpha_n$) are angularly equidistant from each other and optionally angularly equidistant by 90° or by 60° or by 45° or by 30° or by 15°.

5. Apparatus according to any one of the preceding claims, wherein said control unit (15) is configured for cyclically repeating said correction procedure, optionally at regular steps along the main direction (X) or at the pre-established angular positions reached by the laser emitter (600) or by the distance sensor (700) along the main direction (X); and/or
wherein said control unit (15) is configured for commanding the movement of the laser emitter (600) and of the distance sensor (700) in a plurality of successive positions along said main direction (X) and for repeating said correction procedure at a multiplicity of successive positions taken by the emitter and/or by the distance sensor (700) along said main direction (X).

6. Apparatus according to claim 1, wherein the matrix (M) comprises a plurality of vectors relative to axially consecutive helices of the cylindrical body (1); and/or

wherein the matrix (M) comprises a plurality of vectors relative to the same section of the cylindrical body (1). further wherein said control unit (15) is configured for:

positioning said distance sensor (700) at a pre-established starting position along the main direction (X),
maintaining said distance sensor (700) in said starting position during the completion of a plurality of complete rotations of the cylindrical body (1) around the rotation axis (K),
determining a plurality of initial vectors (V), wherein each initial vector (V) comprises the plurality of distance values determined for a respective complete rotation of the cylindrical body (1) around the rotation axis (K), said initial vectors all being relative to the same section of the cylindrical body (1) corresponding to said starting position,
forming the matrix (M) as matrix comprising said plurality of said initial vectors (V) relative to the same section of the cylindrical body (1) corresponding to said starting position,

in particular wherein the control unit (15) is configured for commanding the laser emitter (600) to not emit any laser beam directed towards a surface of the cylindrical body (1) rotating in the operative seat until said distance sensor (700) is in said starting position.

7. Apparatus according to claim 6, wherein the control unit (15) is configured for:

commanding the movement of the laser emitter (600) along said pre-established travel, determining updating vectors (V) during the movement of the laser emitter (600), wherein each updating vector (V) comprises the plurality of distance values determined for a respective complete rotation of the cylindrical body (1) around the rotation axis (K), said updating vectors (V) being relative to axially consecutive helices of the cylindrical body (1) intercepted by the distance sensor (700) during the movement of the laser emitter (600), updating said matrix (M) by progressively substituting said initial vectors with said updating vectors, in particular substituting the initial vector (V) that has been present in the matrix (M) for more time as soon as an updating vector (V) is available.

8. Apparatus according to any one of the preceding claims, wherein said step of determining if said distance values meet a pre-established acceptability criterion provides for checking if one or more distance values relative to a pre-established number of complete rotations of the cylindrical body (1), optionally relative to a same complete rotation of the cylindrical body (1) around the rotation axis (K), fall within a pre-established acceptability range comprised between a minimum distance value and a maximum distance value from the lateral surface of the cylindrical body (1).

9. Apparatus according to any one of the preceding claims, wherein said step of determining if said distance values meet a pre-established acceptability criterion comprises:

> calculating a plurality of normalized distance values, each normalized distance value being a function of the distance values, present in said matrix (M), relative to the same rotation angle of the cylindrical body (1) and pertaining to separate rotations of the cylindrical body (1) around the rotation axis (K),
> checking if one or more normalized distance values fall within a pre-established acceptability range comprised between a minimum distance value and a maximum distance value from the lateral surface of the cylindrical body (1);

in particular wherein each normalized distance value is the mean of a plurality of distance values, present in said matrix (M), relative to the same rotation angle of the cylindrical body (1), still more particularly wherein each normalized distance value is the mean of at least 80% of the distance values, present in said matrix (M), relative to the same rotation angle of the cylindrical body (1).

10. Apparatus according to claim 8 or 9, wherein the control unit (15) is configured for:

> receiving or loading, from a memory connected with the control unit (15), a desired distance value (Hx) between the laser emitter (600) and the lateral surface of the cylindrical body (1) which must be maintained during the movement of the laser emitter (600) along said main direction (X),
> determining the maximum distance value as desired distance value (Hx) plus a first tolerance (h1), and the minimum distance value as desired distance value (Hx) minus a second tolerance (h2), optionally wherein said first tolerance (h1) and said second tolerance (h2) are equal;

and wherein said desired distance value (Hx) between the laser emitter (600) and the lateral surface of the cylindrical body (1) is a constant value along said main direction (X) or a variable value according to a pre-established variability law along said main direction (X).

11. Apparatus according to any one of the preceding claims 9 or 10, wherein the step of correcting at least one position of the laser emitter (600) along the auxiliary direction (Z) comprises moving the laser emitter (600) closer to the lateral surface of the cylindrical body (1) if, following said step of determining if said distance values meet a pre-established acceptability criterion, it results that one or more of the distance values or one or more of the normalized distance values are greater than the maximum distance value;
and/or
wherein the step of correcting at least one position of the laser emitter (600) along the auxiliary direction (Z) comprises moving the laser emitter (600) away from the lateral surface of the cylindrical body (1) if, following said step of determining if said distance values meet a pre-established acceptability criterion, it results that one or more of the distance values or one or more of the normalized distance values are lower than the minimum distance value.

12. Apparatus according to any one of the preceding claims comprising:

> at least one guide adjacent to the work station (100) and extended along said main direction (X),
> at least one conveying support, optionally comprising a carriage or a slide, translatable along said guide,
> at least one command member active on the conveying support, commanded by said control unit (15) and configured for moving the conveying support on said guide along the main direction (X);
> wherein the distance sensor (700) and/or the laser emitter (600) are carried by the conveying support and wherein the distance sensor (700) is placed adjacent at a pre-established distance from the laser emitter (600), optionally on the same side where movement sense of the laser emitter (600) and of the distance sensor (700) occurs along said main direction (X);
> and/or
> wherein said step of correcting comprises modifying at least one position of the laser emitter (600) along the auxiliary direction (Z), in a manner so as to approach the acceptability criterion, or bring back within the acceptability criterion the distance value or values which do not meet the same acceptability criterion.

13. Apparatus according to claim 12, wherein

> said laser emitter (600) is carried by the conveying support upon interposition of an intermediate body that is movable relative to the conveying support at least along said auxiliary direction (Z);
> or
> the distance sensor (700) and the laser emitter

(600) are both carried by the conveying support upon interposition of an intermediate body that is movable relative to the conveying support at least along said auxiliary direction (Z);

and wherein the apparatus comprises an adjustment member active at least on the intermediate body, optionally interposed between the intermediate body and the conveying support, configured for moving the intermediate body along the auxiliary direction (Z).

14. Apparatus according to any one of claims 12 or 13, wherein the control unit (15) is communicatively connected with the command member (401) and wherein the step of commanding a movement of the laser emitter (600) and of the distance sensor (700) along said main direction (X) is executed by the control unit (15) commanding said command member, and/or wherein the control unit (15) is communicatively connected with the adjustment member (501) and wherein the step of correcting at least one position of the laser emitter (600) along the auxiliary direction (Z) is executed by the control unit (15) commanding said adjustment member; and/or wherein the work station (100) comprises at least one motor member (200) configured for rotating the cylindrical body (1) received in said operative seat, said motor member being communicatively connected with the control unit (15) which is also configured for commanding the motor member and rotating the cylindrical body (1) around said rotation axis during the execution of said correction procedure; and wherein the control unit (15) is also configured for:

receiving an input command indicative of an angular speed at which the cylindrical body (1) is to be rotated during the surface processing of the cylindrical body (1) itself and consequently commanding the motor member to set said angular speed for the cylindrical body (1).

15. Process for surface processing cylindrical bodies, in particular for the surface texturing of rolling cylinders, said process using an apparatus according to any one of claims 1 to 14, wherein during the rotation of the cylindrical body (1) around the rotation axis (K) the following steps are executed:

- commanding a movement of the laser emitter (600) and of the distance sensor (700) along said main direction (X),
- commanding the emission of a laser beam directed towards a surface of the cylindrical body (1) rotating in the operative seat, consequently allowing a surface processing of the cylindrical body (1) itself,
- executing a correction procedure comprising the following steps:

  ∘ receiving one or more, in particular a plurality of, detection signals from the distance sensor (700), each detection signal being relative to a respective angular position taken by the cylindrical body (1) in said operative seat,
  ∘ based on said detection signals, determining corresponding distance values of the sensor or of the laser emitter (600) from the lateral surface of the cylindrical body (1) rotating in said operative seat,
  ∘ determining if said distance values meet a pre-established acceptability criterion,
  ∘ if one or more of said distance values do not meet the predetermined acceptability criterion, correcting at least one position of the laser emitter (600) along the auxiliary direction (Z),

- determining a plurality of said distance values for each complete rotation of the cylindrical body (1) around the rotation axis (K), each distance value being relative to a respective of pre-established angular positions ($\alpha 1$, $\alpha 2$,... $\alpha n$) taken by the cylindrical body (1) during each complete rotation of the cylindrical body (1) around the rotation axis (K),
- storing, in a corresponding vector (V), the distance values determined for a same complete rotation of the cylindrical body (1) around the rotation axis (K),
- determining a plurality of said vectors, wherein each vector (V) comprises the plurality of distance values determined for a respective complete rotation of the cylindrical body (1) around the rotation axis (K), and **characterized in**
- forming a matrix (M) comprising said plurality of said vectors; wherein each of the vectors (V) of said matrix (M) comprises a plurality of distance values determined for a respective complete rotation of the cylindrical body (1) around the rotation axis (K) and relative to a respective section of the cylindrical body (1), wherein the matrix (M) is configured to serve for checking if the surface of the cylindrical body (1) is actually eccentric with respect to the rotation axis,
- due to the creation of the matrix (M), constructing an acceptability criterion which is not affected by possible errors of point reading of the distance, nor by possible localized irregularities of the surface of the cylindrical body (1).

**Patentansprüche**

1. Vorrichtung zur Flächenbearbeitung von Zylinderkörpern, insbesondere zur Flächentexturierung von rollenden Zylindern, umfassend:

   - eine Arbeitsstation (100), welche wenigstens einen operativen Sitz definiert, welcher angeordnet ist, um in einem Verwendungszustand der Vorrichtung, einen Zylinderkörper (1) aufzunehmen, welcher oberflächlich zu bearbeiten ist, wobei die Arbeitsstation (100) dazu eingerichtet ist, den Zylinderkörper (1) entsprechend einer vorbestimmten Rotationsachse (K) rotierbar zu stützen,
   - wenigstens einen Laseremitter (600), welcher mit der Arbeitsstation (100) zusammenwirkt und dazu eingerichtet ist, wenigstens einen Laserstrahl in die Richtung des operativen Sitzes zu emittieren, wobei der Laseremitter (600) wenigstens entlang einer Hauptrichtung (X), welche im Wesentlichen parallel zu der Rotationsachse (K) des Zylinderkörpers (1) ist, und entsprechend einer Hilfsrichtung (Z) bewegbar ist, welche transversal zu der Hauptrichtung (X) ist,
   - wenigstens einen Entfernungssensor (700), welcher in einer vorbestimmten Positionsrelation in Bezug auf den Laseremitter (600) angeordnet und dazu eingerichtet ist, einen Steuerungsparameter relativ zu einer Entfernung des Sensors selbst oder des Laseremitters (600) von einer äußeren lateralen Fläche des Zylinderkörpers (1) zu ermitteln, welcher in dem Verwendungszustand in dem operativen Sitz positioniert ist, und dazu, ein korrespondierendes Detektionssignal zu emittieren,
   - eine Steuerungseinheit (15), welche kommunikativ mit dem Laseremitter (600) und mit dem Entfernungssensor (700) verbunden ist, wobei die Steuerungseinheit (15) dazu eingerichtet ist, während des Verwendungszustands der Vorrichtung wenigstens die folgenden Schritte auszuführen:

      ○ Veranlassen einer Bewegung des Laseremitters (600) und des Entfernungssensors (700) entlang der Hauptrichtung (X),
      ○ Veranlassen, wenigstens während eines vorbestimmten Versatzes des Laseremitters (600) entlang der Hauptrichtung (X), der Emission eines Laserstrahls, welcher zu einer Fläche des Zylinderkörpers (1) gerichtet ist, welcher in dem operativen Sitz rotiert, sodass eine Flächenbearbeiten des Zylinderkörpers (1) selbst zugelassen ist,
      ○ Durchführen einer Korrekturprozedur umfassend die folgenden Schritte:

         ▪ Erhalten von einem oder mehreren Detektionssignalen von dem Entfernungssensor (700), wobei jedes Detektionssignal relativ zu einer entsprechenden Winkelposition ist, welche durch den Zylinderkörper (1) in dem operativen Sitz eingenommen ist,
         ▪ basierend auf den Detektionssignalen Bestimmen von entsprechenden Entfernungswerten des Entfernungssensors (700) oder des Laseremitters (600) von der lateralen Fläche des Zylinderkörpers (1), welcher in dem operativen Sitz rotiert,
         ▪ Bestimmen ob die Entfernungswerte ein voreingestelltes Akzeptanzkriterium erfüllen,
         ▪ wenn einer oder mehrere der Entfernungswerte das vorbestimmte Akzeptanzkriterium nicht erfüllen, Korrigieren von wenigstens einer Position des Laseremitters (600) entlang der Hilfsrichtung (Z);

   wobei die Steuerungseinheit (15) ferner eingerichtet ist zum:

   - Bestimmen einer Mehrzahl der Entfernungswerte für jede vollständige Rotation des Zylinderkörpers (1) um die Rotationsachse (K), wobei jeder Entfernungswert relativ zu einer entsprechenden von voreingestellten Winkelpositionen ($\alpha 1$, $\alpha_2$, ..., $\alpha_n$) ist, welche durch den Zylinderkörper (1) während jeder vollständigen Rotation des Zylinderkörpers (1) um die Rotationsachse (K) eingenommen werden,
   - Speichern, in einem entsprechenden Vektor (V), der Entfernungswerte, welche für eine gleiche vollständige Rotation des Zylinderkörpers (1) um die Rotationsachse (K) bestimmt werden,
   - Bestimmen einer Mehrzahl der Vektoren, wobei jeder Vektor (V) die Mehrzahl von Entfernungswerten umfasst, welche für eine entsprechende vollständige Rotation des Zylinderkörpers (1) um die Rotationsachse (K) bestimmt sind, und

   **dadurch gekennzeichnet, dass** die Steuerungseinheit (15) ferner eingerichtet ist zum:

   - Bilden einer Matrix (M), welche die Mehrzahl der Vektoren umfasst;
   wobei jeder der Vektoren (V) der Matrix (M) eine Mehrzahl von Entfernungswerten umfasst, welche für eine entsprechende vollständige Rotation des Zylinderkörpers (1) um die Rotationsachse (K) und relativ zu einem entsprechenden Abschnitt des Zylinderkörpers (1) bestimmt werden,

wobei die Matrix (M) dazu eingerichtet ist, zum Überprüfen zu dienen, ob die Fläche des Zylinderkörpers (1) tatsächlich exzentrisch in Bezug auf die Rotationsachse ist, und wobei die Steuerungseinheit (15), wegen der Erstellung der Matrix (M), ferner dazu eingerichtet ist, ein Akzeptanzkriterium aufzustellen, welches nicht durch mögliche Fehler eines punktuellen Bestimmens der Entfernung, noch durch mögliche örtliche Unregelmäßigkeiten der Fläche des Zylinderkörpers (1) beeinflusst ist.

2. Vorrichtung nach Anspruch 1, wobei der Schritt des Erhaltens ein Erhalten einer Mehrzahl der Detektionssignale von dem Entfernungssensor (700) für jede vollständige Rotation des Zylinderkörpers (1) um die Rotationsachse (K) bereitstellt; und/oder wobei der Schritt des Bestimmens der Entfernungswerte für jede vollständige Rotation des Zylinderkörpers (1) um die Rotationsachse (K) ein Bestimmen eines entsprechenden Entfernungswertes für jede der voreingestellten Winkelpositionen bereitstellt, welche durch den Zylinderkörper (1) eingenommen sind, insbesondere eines entsprechenden Entfernungswertes relativ zu jeder der voreingestellten Winkelpositionen, welche durch den Zylinderkörper (1) in einer gleichen vollständigen Rotation des Zylinderkörpers (1) eingenommen sind.

3. Vorrichtung nach einem der vorhergehenden Ansprüche, wobei

der Schritt des Erhaltens ein Erhalten einer Mehrzahl von Detektionssignalen von dem Entfernungssensor (700) für jede vollständige Rotation des Zylinderkörpers (1) um die Rotationsachse (K) relativ zu dem gleichen Abschnitt des Zylinderkörpers (1) bereitstellt, und wobei der Schritt des Bestimmens der Entfernungswerte für jede vollständige Rotation des Zylinderkörpers (1) um die Rotationsachse (K) ein Bestimmen einer Mehrzahl von Entfernungswerten relativ zu dem gleichen Abschnitt des Zylinderkörpers (1) bereitstellt; und/oder wobei die Vorrichtung wenigstens einen Winkelpositionsdetektor umfasst, optional wenigstens einen Encoder umfasst, wobei der wenigstens eine Winkelpositionsdetektor kommunikativ mit der Steuerungseinheit (15) verbunden und dazu eingerichtet ist, ein oder mehrere Positionssignale relativ zu der Winkelposition des Zylinderkörpers (1) zu emittieren, welcher in dem operativen Sitz rotiert, insbesondere der Steuerungseinheit (15) die Winkelposition des Zylinderkörpers (1) in einer durchgehenden Weise und in Echtzeit zu signalisieren.

4. Vorrichtung nach einem der vorhergehenden Ansprüche, wobei der Schritt des Erhaltens von einem oder mehreren, insbesondere von der Mehrzahl der Detektionssignale, von dem Entfernungssensor (700) umfasst:

Befragen des Entfernungssensors (700), um entsprechende Detektionssignale relativ zu voreingestellten Winkelpositionen ($\alpha 1$, $\alpha_2$, ..., $\alpha_n$) zu erhalten, welche durch den Zylinderkörper (1) eingenommen sind; insbesondere wobei die Steuerungseinheit (15) dazu eingerichtet ist, den Entfernungssensor (700) eine Mehrzahl von Malen für jede vollständige Rotation des Zylinderkörpers (1) zu befragen und dann eine Mehrzahl von entsprechenden Detektionssignalen relativ zu einer entsprechenden Mehrzahl von voreingestellten Winkelpositionen ($\alpha 1$, $\alpha_2$, ..., $\alpha_n$) zu erhalten, welche durch den Zylinderkörper (1) bei jeder Rotation eingenommen sind; optional wobei die voreingestellten Winkelpositionen ($\alpha 1$, $\alpha_2$, ..., $\alpha_n$) winkelmäßig äquidistant zueinander und optional winkelmäßig äquidistant um 90° oder um 60° oder um 45° oder um 30° oder um 15° sind.

5. Vorrichtung nach einem der vorhergehenden Ansprüche, wobei die Steuerungseinheit (15) dazu eingerichtet ist, die Korrekturprozedur zyklisch wiederholend durchzuführen, optional an regelmäßigen Schritten entlang der Hauptrichtung (X) oder an den voreingestellten Winkelpositionen durchzuführen, welche durch den Laseremitter (600) oder durch den Entfernungssensor (700) entlang der Hauptrichtung (X) erreicht werden; und/oder wobei die Steuerungseinheit (15) dazu eingerichtet ist, die Bewegung des Laseremitters (600) und des Entfernungssensors (700) in einer Mehrzahl von aufeinanderfolgenden Positionen entlang der Hauptrichtung (X) zu veranlassen und die Korrekturprozedur an einer Vielzahl von aufeinanderfolgenden Positionen zu wiederholen, welche durch den Emitter und/oder den Entfernungssensor (700) entlang der Hauptrichtung (X) eingenommen werden.

6. Vorrichtung nach Anspruch 1, wobei die Matrix (M) eine Mehrzahl von Vektoren umfasst, welche relativ zu axial aufeinanderfolgenden Helices des Zylinderkörpers (1) sind; und/oder wobei die Matrix (M) eine Mehrzahl von Vektoren umfasst, welche relativ zu dem gleichen Abschnitt des Zylinderkörpers (1) sind, ferner wobei die Steuerungseinheit (15) eingerichtet ist zum:

Positionieren des Entfernungssensors (700) an einer vorbestimmten Startposition entlang der Hauptrichtung (X),

beibehalten des Entfernungssensors (700) an der Startposition während der Vervollständigung einer Mehrzahl von vollständigen Rotationen des Zylinderkörpers (1) um die Rotationsachse (K),

Bestimmen einer Mehrzahl von initialen Vektoren (V), wobei jeder initiale Vektor (V) die Mehrzahl von Entfernungswerten umfasst, welche für eine entsprechende vollständige Rotation des Zylinderkörpers (1) um die Rotationsachse (K) bestimmt werden, wobei die initialen Vektoren alle relativ zu dem gleichen Abschnitt des Zylinderkörpers (1) sind, welcher der Startposition entspricht,

Bilden der Matrix (M) als eine Matrix, welche die Mehrzahl der initialen Vektoren (V) relativ zu dem gleichen Abschnitt des Zylinderkörpers (1) umfasst, welcher der Startposition entspricht,

insbesondere wobei die Steuerungseinheit (15) dazu eingerichtet ist, den Laseremitter (600) dazu zu veranlassen, keinen Laserstrahl zu emittieren, welcher zu einer Fläche des Zylinderkörpers (1) gerichtet ist, welcher in dem operativen Sitz rotiert, bis der Entfernungssensor (700) sich in der Startposition befindet.

7. Vorrichtung nach Anspruch 6, wobei die Steuerungseinheit (15) eingerichtet ist zum:

Veranlassen der Bewegung des Laseremitters (600) entlang des vorbestimmten Versatzes,

Bestimmen von Aktualisierungsvektoren (V) während der Bewegung des Laseremitters (600), wobei jeder Aktualisierungsvektor (V) die Mehrzahl von Entfernungswerten umfasst, welche für eine entsprechende vollständige Rotation des Zylinderkörpers (1) um die Rotationsachse (K) bestimmt sind, wobei die Aktualisierungsvektoren (V) relativ zu axial aufeinanderfolgende Helices des Zylinderkörpers (1) sind, welche durch den Entfernungssensor (700) während der Bewegung des Laseremitters (600) unterbrochen sind,

Aktualisieren der Matrix (M) durch fortschreitendes Substituieren der initialen Vektoren durch die Aktualisierungsvektoren, insbesondere Substituieren des initialen Vektors (V), welcher in der Matrix (M) für eine längere Zeit vorhanden ist, sobald ein Aktualisierungsvektor (V) verfügbar ist.

8. Vorrichtung nach einem der vorhergehenden Ansprüche, wobei der Schritt des Bestimmens, ob die Entfernungswerte ein vorbestimmtes Akzeptanzkriterium erfüllen, ein Überprüfen bereitstellt, ob einer oder mehrere Entfernungswerte relativ zu einer voreingestellten Anzahl von vollständigen Rotationen des Zylinderkörpers (1), optional relativ zu der gleichen vollständigen Rotation des Zylinderkörpers (1) um die Rotationsachse (K), in einen voreingestellten Akzeptanzbereich fallen, welcher zwischen einem minimalen Entfernungswert und einem maximalen Entfernungswert von der lateralen Fläche des Zylinderkörpers (1) umfasst ist.

9. Vorrichtung nach einem der vorhergehenden Ansprüche, wobei der Schritt des Bestimmens, ob die Entfernungswerte ein voreingestelltes Akzeptanzkriterium erfüllen, umfasst:

Berechnen einer Mehrzahl von normalisierten Entfernungswerten, wobei jeder normalisierte Entfernungswert eine Funktion der Entfernungswerte, welche in der Matrix (M) vorliegen, relativ zu dem gleichen Rotationswinkel des Zylinderkörpers (1) und betreffend verschiedene Rotationen des Zylinderkörpers (1) um die Rotationsachse (K) ist;

Überprüfen, ob einer oder mehrere normalisierte Entfernungswerte in einen voreingestellten Akzeptanzbereich fallen, welcher zwischen einem minimalen Entfernungswert und einem maximalen Entfernungswert von der lateralen Fläche des Zylinderkörpers (1) umfasst ist;

insbesondere wobei jeder normalisierte Entfernungswert der Mittelwert einer Mehrzahl von Entfernungswerten, welche in der Matrix (M) vorliegen, relativ zu dem gleichen Rotationswinkel des Zylinderkörpers (1) ist, weiter insbesondere wobei jeder normalisierte Entfernungswert der Mittelwert von wenigstens 80% der Entfernungswerte, welche in der Matrix (M) vorliegen, relativ zu dem gleichen Rotationswinkel des Zylinderkörpers (1) ist.

10. Vorrichtung nach Anspruch 8 oder 9, wobei die Steuerungseinheit (15) eingerichtet ist zum:

Erhalten oder Laden, von einem Speicher, welcher mit der Steuerungseinheit (15) verbunden ist, eines angestrebten Entfernungswertes (Hx) zwischen dem Laseremitter (600) und der lateralen Fläche des Zylinderkörpers (1), welcher während der Bewegung des Laseremitters (600) entlang der Hauptrichtung (X) beibehalten werden soll,

Bestimmen des maximalen Entfernungswertes als den angestrebten Entfernungswert (Hx) plus eine erste Toleranz (h1), und des minimalen Entfernungswertes als den angestrebten Entfernungswert (Hx) minus eine zweite Toleranz (h2), optional wobei die erste Toleranz (h1) und die zweite Toleranz (h2) gleich sind; und wobei der angestrebte Entfernungswert (Hx) zwischen dem Laseremitter (600) und der lateralen Fläche des Zylinderkörpers (1) ein konstanter Wert entlang der Hauptrichtung (X) oder ein variabler Wert entsprechend einer voreingestellten Variabilitätsvorschrift entlang der Hauptrichtung (X) ist.

11. Vorrichtung nach einem der vorhergehenden Ansprüche 9 oder 10, wobei der Schritt des Korrigierens wenigstens einer Position des Laseremitters (600) entlang der Hilfsrichtung (Z) ein Bewegen des Laseremitters (600) näher zu der lateralen Fläche des Zylinderkörpers (1) umfasst, wenn es sich, folgend auf den Schritt des Bestimmens, ob die Entfernungswerte ein voreingestelltes Akzeptanzkriterium erfüllen, ergibt, dass einer oder mehrere der Entfernungswerte oder einer oder mehrere der normalisierten Entfernungswerte größer sind als der maximale Entfernungswert; und/oder wobei der Schritt des Korrigierens wenigstens einer Position des Laseremitters (600) entlang der Hilfsrichtung (Z) ein Bewegen des Laseremitters (600) weg von der lateralen Fläche des Zylinderkörpers (1) umfasst, wenn es sich, folgend auf den Schritt des Bestimmens, ob die Entfernungswerte ein voreingestelltes Akzeptanzkriterium erfüllen, ergibt, dass einer oder mehrere der Entfernungswerte oder einer oder mehrere der normalisierten Entfernungswerte niedriger sind als der minimale Entfernungswert.

12. Vorrichtung nach einem der vorhergehenden Ansprüche, umfassend:

wenigstens eine Führung benachbart zu der Arbeitsstation (100) und sich entlang der Hauptrichtung (X) erstreckend, wenigstens eine Zuführungsstütze, welche optional einen Schlitten oder eine Rutsche umfasst, welche entlang der Führung bewegbar ist, wenigstens ein Veranlassungsbauteil, welches an der Zuführungsstütze aktiv ist, welches durch die Steuerungseinheit (15) veranlasst und dazu eingerichtet ist, die Zuführungsstütze an der Führung entlang der Hauptrichtung (X) zu bewegen; wobei der Entfernungssensor (700) und/oder der Laseremitter (600) durch die Zuführungsstütze getragen sind und wobei der Entfernungssensor (700) benachbart an einer voreingestellten Entfernung zu dem Laseremitter (600) angeordnet ist, optional an der gleichen Seite angeordnet ist, wo eine Bewegungsfeststellung des Laseremitters (600) und des Entfernungssensors (700) entlang der Hauptrichtung (X) erfolgt; und/oder wobei der Schritt des Korrigierens ein Modifizieren von wenigstens einer Position des Laseremitters (600) entlang der Hilfsrichtung (Z) in einer Weise umfasst, um das Akzeptanzkriterium anzunähern, oder um den Abstandswert oder Werte, welche nicht das gleiche Akzeptanzkriterium erfüllen, zurück in das Akzeptanzkriterium zu bringen.

13. Vorrichtung nach Anspruch 12, wobei

der Laseremitter (600) durch die Zuführungsstütze getragen ist auf ein Einfügen eines Zwischenkörpers hin, welcher relativ zu der Zuführungsstütze wenigstens entlang der Hilfsrichtung (Z) bewegbar ist; oder der Entfernungssensor (700) und der Laseremitter (600) beide durch die Zuführungsstütze getragen sind auf das Einfügen eines Zwischenkörpers hin, welcher relativ zu der Zuführungsstütze wenigstens entlang der Hilfsrichtung (Z) bewegbar ist; und wobei die Vorrichtung ein Anpassungsbauteil umfasst, welches wenigstens an dem Zwischenkörper aktiv ist, optional welches zwischen dem Zwischenkörper und der Zuführungsstütze eingefügt ist, welches zum Bewegen des Zwischenkörpers entlang der Hilfsrichtung (Z) eingerichtet ist.

14. Vorrichtung nach einem der Ansprüche 12 oder 13, wobei die Steuerungseinheit (15) kommunikativ mit dem Veranlassungsbauteil (401) verbunden ist und wobei der Schritt des Veranlassens einer Bewegung des Laseremitters (600) und des Entfernungssensors (700) entlang der Hauptrichtung (X) durch die Steuerungseinheit (15) ausgeführt wird, welche das Veranlassungsbauteil veranlasst, und/oder wobei die Steuerungseinheit (15) kommunikativ mit dem Anpassungsbauteil (501) verbunden ist und wobei der Schritt des Korrigierens wenigstens einer Position des Laseremitters (600) entlang der Hilfsrichtung (Z) durch die Steuerungseinheit (15) ausgeführt wird, welche das Anpassungsbauteil veranlasst; und/oder wobei die Arbeitsstation (100) wenigstens ein Motorbauteil (200) umfasst, welches zum Rotieren des Zylinderkörpers (1) eingerichtet ist, welcher in dem operativen Sitz aufgenommen ist, wobei das Motorbauteil kommunikativ mit der Steuerungseinheit (15) verbunden ist, welche ebenfalls zum Veranlassen des Motorbauteils und zum Rotieren des Zylinderkörpers (1) um die Rotationsachse während des Durchführens der Korrekturprozedur eingerichtet ist; und wobei die Steuerungseinheit (15) ebenfalls eingerichtet ist zum:

> entgegennehmen eines Eingabebefehls, welcher indikativ für eine Winkelgeschwindigkeit ist, bei welcher der Zylinderkörper (1) während der Flächenbearbeitung des Zylinderkörpers (1) selbst zu rotieren ist, und
>
> nachfolgend Veranlassen des Motorbauteils zum Einstellen der Winkelgeschwindigkeit des Zylinderkörpers (1).

15. Verfahren zur Flächenbearbeitung von Zylinderkörpern, insbesondere zur Flächentexturierung von rollenden Zylindern, wobei das Verfahren eine Vorrichtung nach einem der Ansprüche 1 bis 14 verwendet, wobei während der Rotation des Zylinderkörpers (1) um die Rotationsachse (K) die folgenden Schritte durchgeführt werden:

> - Veranlassen einer Bewegung des Laseremitters (600) und des Entfernungssensors (700) entlang der Hauptrichtung (X),
> - Veranlassen der Emission eines Laserstrahls, welcher zu einer Fläche des Zylinderkörpers (1) gerichtet ist, welcher in dem operativen Sitz rotiert, sodass eine Flächenbearbeitung des Zylinderkörpers (1) selbst zugelassen wird,
> - Durchführen einer Korrekturprozedur umfassend die folgenden Schritte:
>
> > ◦ Erhalten von einem oder mehreren, insbesondere von einer Mehrzahl von Detektionssignalen von dem Entfernungssensor (700), wobei jedes Detektionssignal relativ zu einer entsprechenden Winkelposition ist, welche von dem Zylinderkörper (1) in dem operativen Sitz eingenommen ist,
> > ◦ basierend auf den Detektionssignalen Bestimmen von entsprechenden Entfernungswerten des Sensors oder des Laseremitters (600) von der lateralen Fläche des Zylinderkörpers (1), welcher in dem operativen Sitz rotiert,
> > ◦ Bestimmen ob die Entfernungswerte ein voreingestelltes Akzeptanzkriterium erfüllen,
> > ◦ wenn einer oder mehrere der Entfernungswerte das vorbestimmte Akzeptanzkriterium nicht erfüllen, Korrigieren von wenigstens einer Position des Laseremitters (600) entlang der Hilfsrichtung (Z),
>
> - Bestimmen einer Mehrzahl der Entfernungswerte für jede vollständige Rotation des Zylinderkörpers (1) um die Rotationsachse (K), wobei jeder Entfernungswert relativ zu einer entsprechenden von voreingestellten Winkelpositionen ($\alpha_1$, $\alpha_2$, ..., $\alpha_n$) ist, welche durch den Zylinderkörper (1) während jeder vollständigen Rotation des Zylinderkörpers (1) um die Rotationsachse (K) eingenommen werden,

> - Speichern, in einem entsprechenden Vektor (V), der Entfernungswerte, welche für eine gleiche vollständige Rotation des Zylinderkörpers (1) um die Rotationsachse (K) bestimmt werden,
> - Bestimmen einer Mehrzahl der Vektoren, wobei jeder Vektor (V) die Mehrzahl der Entfernungswerte für eine entsprechende vollständige Rotation des Zylinderkörpers (1) um die Rotationsachse (K) umfasst, und **gekennzeichnet durch**
> - Bilden einer Matrix (M), welche die Mehrzahl der Vektoren umfasst; wobei jeder der Vektoren (V) der Matrix (M) eine Mehrzahl von Entfernungswerten umfasst, welche für eine entsprechende vollständige Rotation des Zylinderkörpers (1) um die Rotationsachse (K) und relativ zu einem entsprechenden Abschnitt des Zylinderkörpers (1) bestimmt werden, wobei die Matrix (M) dazu eingerichtet ist, zum Überprüfen zu dienen, ob die Fläche des Zylinderkörpers (1) tatsächlich exzentrisch in Bezug auf die Rotationsachse ist,
> - wegen der Erstellung der Matrix (M), Aufstellen eines Akzeptanzkriteriums, welches nicht durch mögliche Fehler eines punktuellen Bestimmens der Entfernung, noch durch mögliche örtliche Unregelmäßigkeiten der Fläche des Zylinderkörpers (1) beeinflusst wird.

## Revendications

1. Appareil pour le traitement de surface de corps cylindriques, en particulier pour la texturation de surface de cylindres de laminage, comprenant :

> - un poste de travail (100) définissant au moins un siège fonctionnel agencé pour recevoir, dans une condition d'utilisation de l'appareil, un corps cylindrique (1) à superficiellement traiter, ledit poste de travail (100) étant configuré pour supporter de manière à pouvoir tourner le corps cylindrique (1) en fonction d'un axe de rotation (K) prédéterminé,
> - au moins un émetteur laser (600) coopérant avec le poste de travail (100) et configuré pour émettre au moins un faisceau laser dans la direction dudit siège fonctionnel, ledit émetteur laser (600) étant mobile au moins le long d'une direction principale (X) sensiblement parallèle à l'axe de rotation (K) du corps cylindrique (1) et selon une direction auxiliaire (Z) transversale à ladite direction principale (X),
> - au moins un capteur de distance (700) agencé dans une relation de position prédéterminée par rapport à l'émetteur laser (600) et configuré pour

détecter un paramètre de commande par rapport à une distance du capteur lui-même ou de l'émetteur laser (600) depuis une surface latérale externe du corps cylindrique (1) positionné, dans ladite condition d'utilisation, dans le siège fonctionnel et émettre un signal de détection correspondant,

- une unité de commande (15) raccordée de manière à communiquer à l'émetteur laser (600) et avec le capteur de distance (700), dans lequel ladite unité de commande (15) est configurée pour exécuter, durant ladite condition d'utilisation de l'appareil, au moins les étapes suivantes :

∘ commander un mouvement de l'émetteur laser (600) et du capteur de distance (700) le long de ladite direction principale (X),
∘ commander, au moins durant un déplacement prédéterminé le long de ladite direction principale (X) de l'émetteur laser (600), l'émission d'un faisceau laser dirigé vers une surface du corps cylindrique (1) tournant dans le siège fonctionnel, permettant en conséquence un traitement de surface du corps cylindrique (1) lui-même,
∘ exécuter une procédure de correction comprenant les étapes suivantes consistant à :

▪ recevoir un ou plusieurs signaux de détection du capteur de distance (700), chaque signal de détection se rapportant à une position angulaire respective prise par le corps cylindrique (1) dans ledit siège fonctionnel,
▪ sur la base desdits signaux de détection, déterminer des valeurs de distance correspondantes du capteur de distance (700) ou de l'émetteur laser (600) depuis la surface latérale du corps cylindrique (1) tournant dans ledit siège fonctionnel,
▪ déterminer si lesdites valeurs de distance satisfont un critère d'acceptabilité préétabli,
▪ si l'une ou plusieurs desdites valeurs de distance ne satisfont pas le critère d'acceptabilité prédéterminé, corriger au moins une position de l'émetteur laser (600) le long de la direction auxiliaire (Z) ;

moyennant quoi ladite unité de commande (15) est en outre configurée pour :

- déterminer une pluralité desdites valeurs de distance pour chaque rotation complète du corps cylindrique (1) autour de l'axe de rotation (K), chaque valeur de distance se rapportant à l'une respective des positions angulaires préétablies ($\alpha 1, \alpha_2, ..., \alpha_n$) prises par le corps cylindrique (1) durant chaque rotation complète du corps cylindrique (1) autour de l'axe de rotation (K),
- stocker, dans un vecteur (V) correspondant, les valeurs de distance déterminées pour une même rotation complète du corps cylindrique (1) autour de l'axe de rotation (K),
- déterminer une pluralité desdits vecteurs, dans lequel chaque vecteur (V) comprend la pluralité de valeurs de distance déterminées pour une rotation complète respective du corps cylindrique (1) autour de l'axe de rotation (K), et

**caractérisé en ce que** ladite unité de commande (15) est en outre configurée pour :

- former une matrice (M) comprenant ladite pluralité desdits vecteurs ;

dans lequel chacun des vecteurs (V) de ladite matrice (M) comprend une pluralité de valeurs de distance déterminées pour une rotation complète respective du corps cylindrique (1) autour de l'axe de rotation (K) et par rapport à une section respective du corps cylindrique (1), dans lequel la matrice (M) est configurée pour servir à vérifier si la surface du corps cylindrique (1) est réellement excentrée par rapport à l'axe de rotation, et dans lequel dû à la création de la matrice (M), l'unité de commande (15) est en outre configurée pour construire un critère d'acceptabilité qui n'est pas affecté par de possibles erreurs de lecture en mode point de la distance, ni par de possibles irrégularités localisées de la surface du corps cylindrique (1).

2. Appareil selon la revendication 1, dans lequel ladite étape de réception fournit la réception d'une pluralité desdits signaux de détection depuis le capteur de distance (700) pour chaque rotation complète du corps cylindrique (1) autour dudit axe de rotation (K) ; et/ou
dans lequel ladite étape de détermination des valeurs de distance fournit la détermination, pour chaque rotation complète du corps cylindrique (1) autour dudit axe de rotation (K), une valeur de distance respective pour chacune des positions angulaires préétablies prises par le corps cylindrique (1), en particulier une valeur de distance respective par rapport à chacune des positions angulaires préétablies prises par le corps cylindrique (1) dans une même rotation complète du corps cylindrique (1).

3. Appareil selon l'une quelconque des revendications précédentes, dans lequel

ladite étape de réception fournit la réception d'une pluralité de signaux de détection depuis le capteur de distance (700) pour chaque rotation complète du corps cylindrique (1) autour dudit axe de rotation (K) par rapport à la même section du corps cylindrique (1), et dans lequel ladite étape de détermination des valeurs de distance fournit la détermination, pour chaque rotation complète du corps cylindrique (1) autour dudit axe de rotation (K), une pluralité de valeurs de distance par rapport à la même section du corps cylindrique (1) ; et/ou dans lequel l'appareil comprend au moins un détecteur de position angulaire, comprenant éventuellement au moins un encodeur, ledit au moins un détecteur de position angulaire étant raccordé de manière à communiquer à l'unité de commande (15) et étant configuré pour émettre un ou plusieurs signaux de position par rapport à la position angulaire du corps cylindrique (1) tournant dans le siège fonctionnel, en particulier signalant à l'unité de commande (15) la position angulaire du corps cylindrique (1) d'une manière continue et en temps réel.

4. Appareil selon l'une quelconque des revendications précédentes, dans lequel ladite étape de réception d'un ou plusieurs, en particulier d'une pluralité, desdits signaux de détection depuis le capteur de distance (700) comprend :

l'interrogation dudit capteur de distance (700) afin de recevoir des signaux de détection correspondants par rapport aux positions angulaires préétablies ($\alpha1$, $\alpha_2$, ..., $\alpha_n$) prises par le corps cylindrique (1) ; en particulier dans lequel ladite unité de commande (15) est configurée pour interroger, une pluralité de fois, le capteur de distance (700) pour chaque rotation complète du corps cylindrique (1) et pour ensuite recevoir une pluralité de signaux de détection correspondants par rapport à une pluralité respective de positions angulaires préétablies ($\alpha_1$, $\alpha_2$, ..., $\alpha_n$) prises par le corps cylindrique (1) à chaque rotation ; éventuellement dans lequel les positions angulaires préétablies ($\alpha1$, $\alpha_2$, ..., $\alpha_n$) sont angulairement équidistantes l'une de l'autre et éventuellement angulairement équidistantes de 90° ou de 60° ou de 45° ou de 30° ou de 15°.

5. Appareil selon l'une quelconque des revendications précédentes, dans lequel ladite unité de commande (15) est configurée pour répéter de manière cyclique ladite procédure de correction, éventuellement à des étapes régulières le long de la direction principale (X) ou à des positions angulaires préétablies atteintes par l'émetteur laser (600) ou par le capteur de distance (700) le long de la direction principale (X) ; et/ou dans lequel ladite unité de commande (15) est configurée pour commander le mouvement de l'émetteur laser (600) et du capteur de distance (700) dans une pluralité de positions successives le long de ladite direction principale (X) et pour répéter ladite procédure de correction à une multiplicité de positions successives prises par l'émetteur et/ou par le capteur de distance (700) le long de ladite direction principale (X).

6. Appareil selon la revendication 1, dans lequel la matrice (M) comprend une pluralité de vecteurs par rapport aux hélices axialement consécutives du corps cylindrique (1) ; et/ou dans lequel la matrice (M) comprend une pluralité de vecteurs par rapport à la même section du corps cylindrique (1) en outre dans lequel ladite unité de commande (15) est configurée pour :

positionner ledit capteur de distance (700) à une position de départ préétablie le long de la direction principale (X), maintenir ledit capteur de distance (700) dans ladite position de départ durant l'achèvement d'une pluralité de rotations complètes du corps cylindrique (1) autour de l'axe de rotation (K), déterminer une pluralité de vecteurs (V) initiaux, dans lequel chaque vecteur (V) initial comprend la pluralité de valeurs de distance déterminées pour une rotation complète respective du corps cylindrique (1) autour de l'axe de rotation (K), lesdits vecteurs initiaux étant tous relatifs à la même section du corps cylindrique (1) correspondant à ladite position de départ, former la matrice (M) comme matrice comprenant ladite pluralité desdits vecteurs (V) initiaux par rapport à la même section du corps cylindrique (1) correspondant à ladite position de départ, en particulier dans lequel l'unité de commande (15) est configurée pour commander à l'émetteur laser (600) de ne pas émettre de quelconque faisceau laser dirigé vers une surface du corps cylindrique (1) tournant dans le siège fonctionnel jusqu'à ce que ledit capteur de distance (700) se trouve dans ladite position de départ.

**7.** Appareil selon la revendication 6, dans lequel l'unité de commande (15) est configurée pour :

    commander le mouvement de l'émetteur laser (600) le long dudit déplacement préétabli, déterminer des vecteurs (V) de mise à jour durant le mouvement de l'émetteur laser (600), dans lequel chaque vecteur (V) de mise à jour comprend la pluralité de valeurs de distance déterminées pour une rotation complète respective du corps cylindrique (1) autour de l'axe de rotation (K), lesdits vecteurs (V) de mise à jour étant relatifs à des hélices axialement consécutives du corps cylindrique (1) interceptées par le capteur de distance (700) durant le mouvement de l'émetteur laser (600), mettre à jour ladite matrice (M) en substituant progressivement lesdits vecteurs initiaux auxdits vecteurs de mise à jour, en particulier en substituant le vecteur (V) initial qui a été présent dans la matrice (M) pour plus de temps dès qu'un vecteur (V) de mise à jour est disponible.

**8.** Appareil selon l'une quelconque des revendications précédentes, dans lequel ladite étape de détermination du fait que lesdites valeurs de distance satisfont un critère d'acceptabilité préétabli fournit la vérification du fait qu'une ou plusieurs valeurs de distance relatives à un nombre préétabli de rotations complètes du corps cylindrique (1), éventuellement relatives à une même rotation complète du corps cylindrique (1) autour de l'axe de rotation (K), tombent à l'intérieur d'une plage d'acceptabilité préétablie comprise entre une valeur de distance minimale et une valeur de distance maximale depuis la surface latérale du corps cylindrique (1).

**9.** Appareil selon l'une quelconque des revendications précédentes, dans lequel ladite étape de détermination du fait que lesdites valeurs de distance satisfont un critère d'acceptabilité préétabli comprend :

    calculer une pluralité de valeurs de distance normalisées, chaque valeur de distance normalisée étant une fonction des valeurs de distance, présentes dans ladite matrice (M), par rapport au même angle de rotation du corps cylindrique (1) et appartenant à des rotations séparées du corps cylindrique (1) autour de l'axe de rotation (K), vérifier si une ou plusieurs valeurs de distance normalisées tombent à l'intérieur d'une plage d'acceptabilité préétablie comprise entre une valeur de distance minimale et une valeur de distance maximale depuis la surface latérale du corps cylindrique (1) ; en particulier dans lequel chaque valeur de distance normalisée est la moyenne d'une pluralité de valeurs de distance, présentes dans ladite matrice (M), par rapport au même angle de rotation du corps cylindrique (1), encore plus particulièrement dans lequel chaque valeur de distance normalisée est la moyenne d'au moins 80 % des valeurs de distance, présentes dans ladite matrice (M), par rapport au même angle de rotation du corps cylindrique (1).

**10.** Appareil selon la revendication 8 ou 9, dans lequel l'unité de commande (15) est configurée pour :

    recevoir ou charger, depuis une mémoire raccordée à l'unité de commande (15), une valeur de distance souhaitée (Hx) entre l'émetteur laser (600) et la surface latérale du corps cylindrique (1) qui doit être maintenue durant le mouvement de l'émetteur laser (600) le long de ladite direction principale (X), déterminer la valeur de distance maximale comme valeur de distance souhaitée (Hx) plus une première tolérance (h1), et la valeur de distance minimale comme valeur de distance souhaitée (Hx) moins une seconde tolérance (h2), éventuellement dans lequel ladite première tolérance (h1) et ladite seconde tolérance (h2) sont égales ; et dans lequel ladite valeur de distance souhaitée (Hx) entre l'émetteur laser (600) et la surface latérale du corps cylindrique (1) est une valeur constante le long de ladite direction principale (X) ou une valeur variable selon une loi de variabilité préétablie le long de ladite direction principale (X).

**11.** Appareil selon l'une quelconque des revendications précédentes 9 ou 10, dans lequel l'étape de correction d'au moins une position de l'émetteur laser (600) le long de la direction auxiliaire (Z) comprend le déplacement de l'émetteur laser (600) plus près de la surface latérale du corps cylindrique (1) si, suite à ladite étape de détermination du fait que lesdites valeurs de distance satisfont un critère d'acceptabilité préétabli, il résulte qu'une ou plusieurs des valeurs de distance ou une ou plusieurs des valeurs de distance normalisées sont supérieures à la valeur de distance maximale ; et/ou dans lequel l'étape de correction d'au moins une position de l'émetteur laser (600) le long de la direction auxiliaire (Z) comprend le déplacement de l'émetteur laser (600) à l'opposé de la surface latérale du corps cylindrique (1) si, suite à ladite étape de détermination du fait que lesdites valeurs de distance satisfont un critère d'acceptabilité préétabli, il résulte qu'une ou plusieurs des valeurs de distance ou qu'une ou plusieurs des valeurs de distance normalisées sont inférieures à la valeur de distance minimale.

**12.** Appareil selon l'une quelconque des revendications précédentes comprenant :

au moins un guide adjacent au poste de travail (100) et étendu le long de ladite direction principale (X),

au moins un support de transport, comprenant éventuellement un chariot ou un élément de coulissement, pouvant effectuer une translation le long dudit guide,

au moins un élément de commande actif sur le support de transport, commandé par ladite unité de commande (15) et configuré pour déplacer le support de transport sur ledit guide le long de la direction principale (X) ;

dans lequel le capteur de distance (700) et/ou l'émetteur laser (600) sont portés par le support de transport et dans lequel le capteur de distance (700) est placé adjacent à une distance préétablie de l'émetteur laser (600), éventuellement sur le même côté où le sens de mouvement de l'émetteur laser (600) et du capteur de distance (700) se produit le long de ladite direction principale (X) ; et/ou

dans lequel ladite étape de correction comprend la modification d'au moins une position de l'émetteur laser (600) le long de la direction auxiliaire (Z), d'une manière permettant de s'approcher du critère d'acceptabilité, ou de ramener à l'intérieur du critère d'acceptabilité la valeur ou les valeurs de distance qui ne satisfont pas le même critère d'acceptabilité.

**13.** Appareil selon la revendication 12, dans lequel

ledit émetteur laser (600) est porté par le support de transport à l'issue de l'interposition d'un corps intermédiaire qui est mobile par rapport au support de transport au moins le long de ladite direction auxiliaire (Z) ; ou

le capteur de distance (700) et l'émetteur laser (600) sont tous deux portés par le support de transport à l'issue de l'interposition d'un corps intermédiaire qui est mobile par rapport au support de transport au moins le long de ladite direction auxiliaire (Z) ;

et dans lequel l'appareil comprend un élément d'ajustement actif au moins sur le corps intermédiaire, éventuellement interposé entre le corps intermédiaire et le support de transport, configuré pour déplacer le corps intermédiaire le long de la direction auxiliaire (Z).

**14.** Appareil selon l'une quelconque des revendications 12 ou 13, dans lequel l'unité de commande (15) est raccordée de manière à communiquer à l'élément de commande (401) et dans lequel l'étape de commande d'un mouvement de l'émetteur laser (600) et du capteur de distance (700) le long de ladite direction principale (X) est exécutée par l'unité de commande (15) commandant ledit élément de commande, et/ou dans lequel l'unité de commande (15) est raccordée de manière à communiquer à l'élément d'ajustement (501) et dans lequel l'étape de correction d'au moins une position de l'émetteur laser (600) le long de la direction auxiliaire (Z) est exécutée par l'unité de commande (15) commandant ledit élément d'ajustement ; et/ou

dans lequel le poste de travail (100) comprend au moins un élément moteur (200) configuré pour faire tourner le corps cylindrique (1) reçu dans ledit siège fonctionnel, ledit élément moteur étant raccordé de manière à communiquer à l'unité de commande (15) qui est également configurée pour commander l'élément moteur et pour faire tourner le corps cylindrique (1) autour dudit axe de rotation durant l'exécution de ladite procédure de correction ; et dans lequel l'unité de commande (15) est également configurée pour :

recevoir une commande d'entrée indicatrice d'une vitesse angulaire à laquelle le corps cylindrique (1) doit être mis en rotation durant le traitement de surface du corps cylindrique (1) lui-même et

en conséquence commander à l'élément moteur de régler ladite vitesse angulaire pour le corps cylindrique (1).

**15.** Procédé de traitement de surface de corps cylindriques, en particulier pour la texturation de surface de cylindres de laminage, ledit procédé utilisant un appareil selon l'une quelconque des revendications 1 à 14, dans lequel durant la rotation du corps cylindrique (1) autour de l'axe de rotation (K) les étapes suivantes sont exécutées :

- commander un mouvement de l'émetteur laser (600) et du capteur de distance (700) le long de ladite direction principale (X),

- commander l'émission d'un faisceau laser dirigé vers une surface du corps cylindrique (1) tournant dans le siège fonctionnel, permettant en conséquence un traitement de surface du corps cylindrique (1) lui-même,

- exécuter une procédure de correction comprenant les étapes suivantes consistant à :

∘ recevoir l'un ou plusieurs, en particulier une pluralité de, signaux de détection depuis le capteur de distance (700), chaque signal de détection étant relatif à une position angulaire respective prise par le corps cylindrique (1) dans ledit siège fonctionnel,

∘ sur la base desdits signaux de détection, déterminer des valeurs de distance correspondantes du capteur ou de l'émetteur laser (600) depuis la surface latérale du corps cylindrique (1) tournant dans ledit siège fonctionnel,

◦ déterminer si lesdites valeurs de distance satisfont un critère d'acceptabilité préétabli,

◦ si l'une ou plusieurs desdites valeurs de distance ne satisfont pas le critère d'acceptabilité prédéterminé, corriger au moins une position de l'émetteur laser (600) le long de la direction auxiliaire (Z),

- déterminer une pluralité desdites valeurs de distance pour chaque rotation complète du corps cylindrique (1) autour de l'axe de rotation (K), chaque valeur de distance étant relative à l'une respective des positions angulaires préétablies ($\alpha 1$, $\alpha_2$, ..., $\alpha_n$) prises par le corps cylindrique (1) durant chaque rotation complète du corps cylindrique (1) autour de l'axe de rotation (K),

- stocker, dans un vecteur (V) correspondant, les valeurs de distance déterminées pour une même rotation complète du corps cylindrique (1) autour de l'axe de rotation (K),

- déterminer une pluralité desdits vecteurs, dans lequel chaque vecteur (V) comprend la pluralité de valeurs de distance déterminées pour une rotation complète respective du corps cylindrique (1) autour de l'axe de rotation (K), et caractérisé en

- la formation d'une matrice (M) comprenant ladite pluralité desdits vecteurs ; dans lequel chacun des vecteurs (V) de ladite matrice (M) comprend une pluralité de valeurs de distance déterminées pour une rotation complète respective du corps cylindrique (1) autour de l'axe de rotation (K) et par rapport à une section respective du corps cylindrique (1), dans lequel la matrice (M) est configurée pour servir à vérifier si la surface du corps cylindrique (1) est réellement excentrée par rapport à l'axe de rotation,

- dû à la création de la matrice (M), construire un critère d'acceptabilité qui n'est pas affecté par de possibles erreurs de lecture en mode point de la distance, ni par de possibles irrégularités localisées de la surface du corps cylindrique (1).

Fig. 1

Fig. 2

Fig. 3

Fig. 4

Fig. 5

Fig. 6

Cylinder 1
At pitch 1

Fig. 7

Fig. 7A

Cylinder 1
At pitch m

Fig. 8

Fig. 8A

Fig. 9

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2583827 A2